# EUROPEAN PATENT APPLICATION

(11) **EP 3 220 452 A1**
(43) Date of publication of application: **20.09.2017**
(21) Application number: 17153908.3
(22) Date of filing: 31.01.2017
(51) Int. Cl.: H01M 4/131, H01M 4/36, H01M 4/485, H01M 4/62, H01M 10/052, H01M 10/0565, H01M 4/02

(54) **NONAQUEOUS ELECTROLYTE BATTERY, BATTERY PACK AND VEHICLE**

(30) Priority: 16.03.2016 JP 2016052897
(71) Applicant: Kabushiki Kaisha Toshiba, Minato-ku, Tokyo 105-8001 (JP)
(72) Inventor: Hoshina, Keigo, Tokyo, 105-8001 (JP); Harada, Yasuhiro, Tokyo, 105-8001 (JP); Takami, Norio, Tokyo, 105-8001 (JP)
(74) Representative: Hoffmann Eitle

(57) **Abstract**

According to one embodiment, a nonaqueous electrolyte battery (10) is provided. The nonaqueous electrolyte battery (10) includes a positive electrode (5,13), a negative electrode (3, 14) and a gel nonaqueous electrolyte. The negative electrode (3, 14) includes a negative electrode active material-containing layer (3b, 14b) including a titanium-containing oxide. At least a part of the gel nonaqueous electrolyte is held in the negative electrode active material-containing layer (3b, 14b). A ratio of E₁/E₂ is within a range of 0.1 ≤ E₁/E₂ ≤ 0.8. E₁ is a content of the gel nonaqueous electrolyte in a first part (3-1). E₂ is a content of the gel nonaqueous electrolyte in a second part (3-2). The first and second parts (3-1, 3-2) are parts of the negative electrode active material-containing layer (3, 14).

## Description

### FIELD

Embodiments described herein relate generally to a nonaqueous electrolyte battery, a battery pack and a vehicle.

### BACKGROUND

A nonaqueous electrolyte battery, in which a charge and a discharge are performed by migration of lithium ions between a negative electrode and a positive electrode, has been actively researched as a high energy density battery.

This nonaqueous electrolyte battery is expected to be used as a power source for medium or large size devices such as vehicles or a stationary application, as well as a power source for small size electronic devices. In such a medium or large size application, the nonaqueous electrolyte battery is required to have an excellent life property and a high safety. Furthermore, the nonaqueous electrolyte battery also needs to exhibit an excellent input-and-output performance.

Nonaqueous electrolyte batteries having the excellent life property and the high safety may include, for example, a nonaqueous electrolyte battery in which a titanium-containing oxide having a lithium-insertion-and-extraction potential of 1.0 V (vs. Li/Li⁺) or more is used in a negative electrode. Among titanium composite oxides, a titanium-containing oxide which can undergo changes in volume, particularly accompanied with the lithium insertion and/or extraction, may easily lead to a separation of an electrode layer from a current collector or depletion of a liquid electrolyte due to the insertion and/or extraction of lithium.

### BRIEF DESCRIPTION OF THE DRAWINGS

FIG. 1 is a schematic cross-sectional view of an example of a nonaqueous electrolyte battery according to a first embodiment;
FIG. 2 is an enlarged cross-sectional view of a portion A in FIG. 1;
FIG. 3 is an enlarged cross-sectional view of a portion B in FIG. 2;
FIG. 4 is a partially cutaway perspective view schematically showing another example of a nonaqueous electrolyte battery according to the first embodiment;
FIG. 5 is an enlarged cross-sectional view of a portion C in FIG. 4;
FIG. 6 is a schematic exploded perspective view of an example of a battery pack according to a second embodiment;
FIG. 7 is a block diagram showing an electric circuit of the battery pack in FIG. 6; and
FIG. 8 is a schematic sectional view showing an example of an automobile which includes an example of a battery pack according to the second embodiment.

### DETAILED DESCRIPTION

In general, according to one embodiment, there is provided a nonaqueous electrolyte battery. The nonaqueous electrolyte battery includes a positive electrode, a negative electrode and a gel nonaqueous electrolyte. The negative electrode includes a negative electrode current collector and a negative electrode active material-containing layer. The negative electrode active material-containing layer is formed on the negative electrode current collector. The negative electrode active material-containing layer includes a titanium-containing oxide. The negative electrode active material-containing layer includes a first surface facing the positive electrode and a second surface facing the negative electrode current collector. At least a part of the gel nonaqueous electrolyte is held in the negative electrode active material-containing layer. The negative electrode active material-containing layer includes a first part having a depth of 0.1T from the first surface, and a second part having a depth of 0.1T from the second surface. Here, T is a thickness from the first surface to the second surface of the negative electrode active material-containing layer. The nonaqueous electrolyte battery satisfies a ratio of E₁/E₂ within a range of 0.1 ≤ E₁/E₂ ≤ 0.8. E₁ is a content of the gel nonaqueous electrolyte in the first part. E₂ is a content of the gel nonaqueous electrolyte in the second part.

According to the embodiment, there is provided a battery pack. The battery pack includes the nonaqueous electrolyte battery according to the embodiment.

According to the embodiment, there is provided a vehicle. The vehicle includes the battery pack according to the embodiment.

The embodiments will be explained below with reference to the drawings. In this case, the structures common to all embodiments are represented by the same symbols and duplicated explanations will be omitted. Also, each drawing is a typical view for explaining the embodiments and for promoting an understanding of the embodiments. Though there are parts different from an actual device in shape, dimension and ratio, these structural designs may be properly changed taking the following explanations and known technologies into consideration.

### (First Embodiment)

According to a first embodiment, there is provided a nonaqueous electrolyte battery. The nonaqueous electrolyte battery includes a positive electrode, a negative electrode and a gel nonaqueous electrolyte. The negative electrode includes a negative electrode current collector and a negative electrode active material-containing layer. The negative electrode active material-containing layer is formed on the negative electrode current collector. The negative electrode active material-containing layer includes a titanium-containing oxide. The negative electrode active material-containing layer includes a first surface facing the positive electrode and a second surface facing the negative electrode current collector. At least a part of the gel nonaqueous electrolyte is held in the negative electrode active material-containing layer. The negative electrode active material-containing layer includes a first part having a depth of 0.1T from the first surface, and a second part having a depth of 0.1T from the second surface. Here, T is a thickness from the first surface to the second surface of the negative electrode active material-containing layer. The nonaqueous electrolyte battery satisfies a ratio of E₁/E₂ within a range of 0.1 ≤ E₁/E₂ ≤ 0.8. E₁ is a content of the gel nonaqueous electrolyte in the first part. E₂ is a content of the gel nonaqueous electrolyte in the second part.

In the nonaqueous electrolyte battery according to the first embodiment, a ratio E₁/E₂ of a content of the gel nonaqueous electrolyte in a negative electrode active material-containing layer is, as described above, within a range of 0.1 ≤ E₁/E₂ ≤ 0.8. In the nonaqueous electrolyte battery according to the first embodiment, accordingly, the gel nonaqueous electrolyte is not uniformly distributed in the negative electrode active material-containing layer, and the gel nonaqueous electrolyte is contained in a larger content in a part closer to the current collector.

In a negative electrode active material-containing layer, a nonaqueous electrolyte tends to be more easily depleted as it separates farther from a first surface, which is a reaction interface with a positive electrode. In the nonaqueous electrolyte battery according to the first embodiment, however, a larger content of the gel nonaqueous electrolyte is contained in a second part having a depth of 0.1T to from the second surface facing the negative electrode current collector, i.e., a part far from the first surface, in the negative electrode active material-containing layer. It is harder to deplete the gel nonaqueous electrolyte than a liquid nonaqueous electrolyte. For that reason, in the nonaqueous electrolyte battery according to the first embodiment, the depletion of the nonaqueous electrolyte can be prevented in the negative electrode active material-containing layer.

On the other hand, in the part close to the first surface, which is the reaction interface with the positive electrode, the depletion of the nonaqueous electrolyte can be inhibited even if the content of the gel nonaqueous electrolyte is small.

The binding property to the negative electrode current collector can be more enhanced as the gel nonaqueous electrolyte is contained in a larger content in the part, which is closer to the negative electrode current collector, in the negative electrode active material-containing layer. In the nonaqueous electrolyte battery according to the first embodiment, a comparatively large content of the gel nonaqueous electrolyte is contained in the second part in the negative electrode active material-containing layer, the second part having the depth 0.1T from the second surface facing the negative electrode current collector, and thus the excellent binding property between the negative electrode current collector and the negative electrode active material-containing layer can be exhibited.

On the other hand, in the nonaqueous electrolyte battery according to the first embodiment, a comparatively small content of the gel nonaqueous electrolyte is contained in the first part in the negative electrode active material-containing layer, the first part being close to the first surface, which is the reaction interface with the positive electrode, and thus an excellent rate performance and an excellent performance under low-temperature environment can be exhibited.

As the results above, the nonaqueous electrolyte battery according to the first embodiment can exhibit an excellent cycle life property.

The case where the ratio E₁/E₂ of the content of the gel nonaqueous electrolyte is less than 0.1 may include, for example, a case where the content of the gel nonaqueous electrolyte is too small in the first part, and a case where the content of the gel nonaqueous electrolyte is too large in the second part. In such cases, the difference in the resistance is excessively large between the first surface and the second surface, leading to deterioration. On the other hand, the case where the ratio E₁/E₂ of the content of the gel nonaqueous electrolyte is more than 0.8 may include, for example, a case where the content E₂ of the gel nonaqueous electrolyte is too small in the second part in the negative electrode active material-containing layer. In such a case, it is difficult to prevent the depletion of the nonaqueous electrolyte in the negative electrode active material-containing layer. The other case is a case where the content E₁ of the gel nonaqueous electrolyte is too large in the first part in the negative electrode active material-containing layer. In such a case, the transfer of lithium ions to the first surface of the negative electrode active material-containing layer, i.e., the transfer of lithium ions to the reaction interface with the positive electrode, is inhibited, thus resulting in increased resistance. As a result, the negative electrode active material-containing layer is deteriorated.

The ratio E₁/E₂ of the content of the gel nonaqueous electrolyte is preferably within a range of 0.3 ≤ E₁/E₂ ≤ 0.7, more preferably 0.4 ≤ E₁/E₂ ≤ 0.6, in the negative electrode active material-containing layer.

Next, the nonaqueous electrolyte battery according to the first embodiment is described in more detailed.

The nonaqueous electrolyte battery according to the first embodiment can further include a separator provided between the positive electrode and the negative electrode. The positive electrode, the negative electrode, and the separator can constitute an electrode group.

The negative electrode includes the negative electrode current collector and the negative electrode active material-containing layer which is formed on the negative electrode current collector. The negative electrode active material-containing layer may be formed on one surface or both surfaces of the current collector.

The negative electrode active material-containing layer includes a titanium-containing oxide. The titanium-containing oxide can serve as a negative electrode active material. The negative electrode active material-containing layer may further include a conductive agent and a binder.

A part of the gel nonaqueous electrolyte is held in the negative electrode active material-containing layer. For example, the negative electrode active material-containing layer may be impregnated with at least a part of the gel nonaqueous electrolyte. The positive electrode and/or the separator may be impregnated with the gel nonaqueous electrolyte. Alternatively, the gel nonaqueous electrolyte may be held in only the negative electrode active material-containing layer.

The nonaqueous electrolyte battery according to the first embodiment may further include a liquid nonaqueous electrolyte in addition to the gel nonaqueous electrolyte. It is preferable that the negative electrode is further impregnated with the liquid nonaqueous electrolyte in addition to the gel nonaqueous electrolyte. In other words, not only the gel nonaqueous electrolyte but also the liquid nonaqueous electrolyte is held in the negative electrode active material-containing layer. In particular, it is preferable that the first part in the negative electrode active material-containing layer is further impregnated with the liquid nonaqueous electrolyte. The first part in the negative electrode active material-containing layer is close to the first surface, which is the reaction interface with the positive electrode. When the first part in the negative electrode active material-containing layer holds the liquid nonaqueous electrolyte, the transfer of lithium ions to the first surface can be promoted. For that reason, in such a case, a more excellent performance under low-temperature environment and a more excellent rate performance can be exhibited.

Also the positive electrode and the separator may hold the liquid nonaqueous electrolyte. That is, the nonaqueous electrolyte battery according to the first embodiment may further include the liquid nonaqueous electrolyte, and at least a part of the liquid nonaqueous electrolyte may be held in the negative electrode active material-containing layer. In other words, the negative electrode active material-containing layer may be impregnated with at least a part of the liquid nonaqueous electrolyte battery.

In addition, the nonaqueous electrolyte battery according to the first embodiment may further include a container member in which the electrode group, the gel nonaqueous electrolyte, and the optional liquid nonaqueous electrolyte are accommodated.

Furthermore, the nonaqueous electrolyte battery according to the first embodiment may further include a positive electrode terminal electrically connected to the positive electrode, and a negative electrode terminal electrically connected to the negative electrode. At least a part of the positive electrode terminal and at least a part of the negative electrode terminal can extend outward from the container member.

The negative electrode, the positive electrode, the gel nonaqueous electrolyte, the liquid nonaqueous electrolyte, the separator, the container member, the positive electrode terminal, and the negative electrode terminal are described in detail below.

### (1) Negative Electrode

The titanium-containing oxide may include, for example, a Na-containing niobium-titanium composite oxide having an orthorhombic crystal structure, a niobium-titanium composite oxide having a monoclinic crystal structure, a titanium-containing oxide having a monoclinic β-type crystal structure, a lithium-titanium composite oxide having a spinel-type crystal structure, and a lithium-titanium composite oxide having a ramsdellite-type crystal structure. In addition, it may further be exemplified by an anatase-type titanium dioxide, a rutile-type titanium dioxide, and the like. The negative electrode active material-containing layer may include one kind of the titanium-containing oxide or two or more kinds of the titanium-containing oxide.

The Na-containing niobium-titanium composite oxide having the orthorhombic crystal structure, the niobium-titanium composite oxide having the monoclinic crystal structure, and the titanium-containing oxide having the monoclinic β-type crystal structure can realize a high capacity. On the other hand, these titanium-containing oxides can be changed in volume when lithium is inserted or extracted. In the nonaqueous electrolyte battery according to the first embodiment, however, the negative electrode contains the gel nonaqueous electrolyte in a comparatively large content on the side of the negative electrode current collector in the negative electrode active material-containing layer. The gel nonaqueous electrolyte can receive the volume change of the titanium-containing oxide caused by the insertion or extraction of lithium, whereby the peeling off of the negative electrode active material-containing layer from the negative electrode current collector can be prevented. For that reason, the battery in which the negative electrode active material-containing layer includes at least one oxide selected from the group consisting of the Na-containing niobium-titanium composite oxide having the orthorhombic crystal structure, the niobium-titanium composite oxide having the monoclinic crystal structure, and the titanium-containing oxide having the monoclinic β-type crystal structure, among the nonaqueous electrolyte batteries according to the first embodiment, can exhibit an excellent cycle life property and furthermore a higher capacity.

The orthorhombic Na-containing niobium-titanium composite oxide can have an average operating potential of 1.2 to 1.4 V (vs. Li/Li⁺). The value of the operating potential is low in those of the titanium composite oxides. The orthorhombic Na-containing niobium-titanium composite oxide, therefore, can realize a nonaqueous electrolyte battery capable of exhibiting a high battery voltage.

The orthorhombic Na-containing niobium-titanium composite oxide can exhibit, in the range of an operating potential, charge and discharge curves each having a great change in the potential accompanied with the change of state-of-charge. The state-of-charge of the orthorhombic Na-containing niobium-titanium composite oxide, accordingly, can be easily comprehended based on the potential.

The Na-containing niobium-titanium composite oxide having the orthorhombic crystal structure may be represented, for example, by the general formula of Li₂₋ᵥNa_{2-w}M1ₓTi_{6-y-z}Nb_{y}M2_{z}O_{14+δ}. In the general formula, M1 is at least one metal element selected from the group consisting of Cs, K, Sr, Ba, Mg and Ca. M2 is at least one element selected from the group consisting of Al, Sn, V, Ta, Mo, W, Fe, Co and Mn. The subscripts satisfy respectively ranges of 0 ≤ v ≤ 4, 0 < w < 2, 0 ≤ x < 2, 0 < y < 6, 0 ≤ z < 3, and -0.5 ≤ δ ≤ 0.5.

The subscript v can take values within a range of 0 ≤ v ≤ 4 depending on a state-of-charge of the composite oxide.

In the general formula, the subscript w corresponds to the amount of Na included in the orthorhombic Na-containing niobium-titanium composite oxide. The lithium insertion-and-extraction potential of the orthorhombic Na-containing niobium-titanium composite oxide can be adjusted by, for example, the amount of Na in the composite oxide. The subscript w can have a value within a range of, for example, 0 < w < 2. The subscript w preferably has a value within a range from 0.1 to 1.

In the general formula, the subscript x corresponds to the amount of the metallic element M1 included in the orthorhombic Na-containing niobium-titanium composite oxide. The metallic element M1 may be at least one metallic element selected from the group consisting of Cs, K, Sr, Ba, Mg and Ca. The metallic element M1 can be one metallic element. Alternatively, the metallic element M1 can include two or more metallic elements. The subscript x can have a value within a range of, for example, 0 ≤ x < 2. Thus, the orthorhombic Na-containing niobium-titanium composite oxide may not include the metallic element M1. The subscript x preferably has a value within a range from 0.05 to 0.2.

In an aspect, the metallic element M1 includes Cs. When Cs is included, a more excellent cycle life performance can be achieved. In another aspect, the metallic element M1 includes K. When K is included, a more excellent cycle life performance can be achieved. In another aspect, the metallic element M1 includes Mg. When Mg is included, a more excellent rate performance can be achieved. In another aspect, the metallic element M1 includes Sr. When Sr is included, a more excellent rate performance can be achieved. In another aspect, the metallic element M1 includes Ba. When Ba is included, a more excellent rate performance can be achieved. In another aspect, the metallic element M1 includes Ca. When Ca is included, a more excellent rate performance can be achieved. The metallic element M1 preferably includes at least one of Sr and Ba.

In the general formula, the subscript y corresponds to the amount of niobium included in the orthorhombic Na-containing niobium-titanium composite oxide. The subscript y can have a value within a range of, for example, 0 < y < 6. The subscript y preferably has a value within the range from 0.1 to 1.

In the general formula, the subscript z corresponds to the amount of the metallic element M2 included in the orthorhombic Na-containing niobium-titanium composite oxide. The metallic element M2 may be at least one metallic element selected from the group consisting of Al, Sn, V, Ta, Mo, W, Fe, Co and Mn. The metallic element M2 can be one metallic element. Alternatively, the metallic element M2 can include two or more metallic elements. The subscript z can have a value within the range of, for example, 0 ≤ z < 3. Thus, the orthorhombic Na-containing niobium-titanium composite oxide may not include the metallic element M2. The subscript z preferably has a value within a range from 0.1 to 0.3.

In an aspect, the metallic element M2 includes Sn. When Sn is included, a more excellent rate performance can be achieved. In another aspect, the metallic element M2 includes V. V can exhibit the same physical and chemical properties as those of Nb. In another aspect, the metallic element M2 includes Ta. Ta can exhibit the same physical and chemical properties as those of Nb. In another aspect, the metallic element M2 includes Mo. When Mo is included, a more excellent rate performance can be achieved. In another aspect, the metallic element M2 includes W. When W is included, a more excellent rate performance can be achieved. In another aspect, the metallic element M2 includes Fe. When Fe is included, a more excellent cycle performance can be achieved. In another aspect, the metallic element M2 includes Co. When Co is included, a more excellent cycle performance can be achieved. In another aspect, the metallic element M2 includes Mn. When Mn is included, a more excellent cycle performance can be achieved. In another aspect, the metallic element M2 includes Al. When Al is included, a more excellent rate performance can be achieved. The metallic element M2 preferably includes at least one selected from the group consisting of Al, Sn and V.

The subscript δ may correspond to a deviation of the amount of oxygen from the orthorhombic Na-containing niobium-titanium composite oxide that can be represented by the general formula of Li₂₊ᵥNa_{2-w}M1ₓTi_{6-y-z}NbyM2_{z}O₁₄. A negative value of the subscript δ may mean that oxygen is less than the stoichiometric ratio. On the other hand, a positive value of the subscript δ may mean that oxygen is more than the stoichiometric ratio. It is difficult for composite oxide for which the value of the subscript δ exceeds the range of -0.5 ≤ 5 ≤ 0.5 to establish a balance between the rate and cycle performances. The subscript δ preferably has a value within a range of -0.1 ≤ 5 ≤ 0.1.

The orthorhombic Na-containing niobium-titanium composite oxide is not limited to composite oxides represented by the general formula of Li₂₊ᵥNa_{2-w}M1ₓTi_{6-y-z}NbyM2_{z}O₁₄. For example, orthorhombic Na-containing niobium-titanium composite oxides whose Li content per mole is less than 2 moles, such as Li_{1.9}Na_{1.6}Ti_{5.5}Nb_{0.5}O₁₄, may be used.

The niobium-titanium composite oxide having the monoclinic crystal structure may be represented, for example, by the general formula of Ti_{1±a}Nb_{2±b}M1_{c}O_{7-δ2}. In this general formula, the element M1 is at least one metal element selected from the group consisting of Mg, Fe, Ni, Co, W, Ta and Mo. The subscripts satisfy respectively ranges of 0 ≤ a ≤ 0.15, 0 ≤ b ≤ 0.3, 0 ≤ c ≤ 0.2, and 0 ≤ δ2 ≤ 0.3.

The value of the subscript a is preferably within a range of 0.1 ≤ a ≤ 0.12. The value of the subscript b is preferably within a range of 0.1 ≤ b ≤ 0.25. The value of the subscript c is preferably within a range of 0.1 ≤ c ≤ 0.15. The value of the subscript δ2 is preferably within a range of 0.05 ≤ δ2 ≤ 0.2.

The titanium-containing oxide having the monoclinic β-type crystal structure can be represented, for example, by TiO₂. A part of Ti atoms may be substituted by dopants. For example, a part of Ti atoms can be substituted by Nb.

The titanium-containing oxide preferably includes a lithium titanate having a spinel-type crystal structure and at least one selected from the group consisting of Na-containing niobium-titanium composite oxide having the orthorhombic crystal structure, the niobium-titanium composite oxide having the monoclinic crystal structure, and the titanium-containing oxide having the monoclinic β-type crystal structure, each of which is described above. For example, the lithium titanate having the spinel-type crystal structure, which can be represented by the composition formula of Li₄Ti₅O₁₂, has a very small volume change caused by the insertion and extraction of lithium, or has substantially no volume change. Furthermore, the lithium titanate having the spinel-type crystal structure can exhibit the excellent life property.

In the lithium titanate having the spinel-type crystal structure, a part of the titanium atoms and/or the lithium atoms may be substituted by dopants.

The conductive agent can have the effect of improving current-collecting performance and reducing contact resistance between the negative electrode active material and the negative electrode current collector. Examples of the conductive agent include carbonaceous substances such as acetylene black, carbon black, graphite, carbon nanofiber, and carbon nanotube. One of these carboneous substances may be used singly or plural carbonaceous substances may be used.

The binder can have the effect of binding the negative electrode active material, the conductive agent, and the negative electrode current collector. Examples of the binder include polytetrafluoro ethylene (PTFE), polyvinylidene difluoride (PVdF), fluororubber, styrenebutadiene rubber, acrylic resin and copolymers thereof, polyacrylic acid, and polyacrylonitrile.

As for the blending ratios of the negative electrode active material, the conductive agent, and the binder are preferably within the ranges of: 70% by mass or more and 96% by mass or less for the negative electrode active material; 2% by mass or more and 28% by mass or less for the conductive agent; and 2% by mass or more and 28% by mass or less for the binder. The amount of the conductive agent is set to 2% by mass or more, whereby the current-collecting performance of the negative electrode layer can be improved and then excellent large-current characteristics can be expected. Also, the amount of the binder is set to 2% by mass or more, whereby sufficient binding properties between the negative electrode layer and the current collector can be obtain and then excellent cycle characteristics can be expected. From the viewpoint of higher capacities, on the other hand, the conductive agent and the binder are each preferably set to 28% by mass or less.

The negative electrode current collector is preferably formed from aluminum foil or aluminum alloy foil including elements such as Mg, Ti, Zn, Mn, Fe, Cu, and Si. For example, a polymerization initiator may be applied to the surface of the negative electrode current collector. For example, a layer of a polymerization initiator having several micrometers can be carried on the negative electrode current collector.

The first surface of the negative electrode active material-containing layer can form a surface of the negative electrode. The first surface may be brought into contact with, for example, the separator. The second surface of the negative electrode active material-containing layer may be brought into contact with the negative electrode current collector.

### 2) Positive Electrode

The positive electrode can include a current collector and a positive electrode active material-containing layer. The positive electrode active material-containing layer may be formed on one surface or both surfaces of the current collector. The positive electrode active material-containing layer can include a positive electrode active material, and optionally a conductive agent and a binder.

The positive electrode active material may be, for example, an oxide or a composite oxide. Lithium can be inserted into the oxide and the composite oxide, and be extracted from them. Examples of the oxide and composite oxide include a manganese dioxide (MnO₂), an iron oxide, a copper oxide, a nickel oxide, a lithium manganese composite oxide (e.g., LiₓMn₂O₄ or LiₓMnO₂), a lithium nickel composite oxide (e.g., LiₓNiO₂), a lithium cobalt composite oxide (e.g., LiₓCoO₂), a lithium nickel cobalt composite oxide (e.g., LiNi_{1-y}Co_{y}O₂), a lithium manganese cobalt composite oxide (e.g., LiₓMn_{y}Co₁₋yO₂), a lithium nickel cobalt manganese composite oxide (e.g., LiNi_{1-y-z}C_{Oy}Mn_{z}O₂), a lithium nickel cobalt aluminum composite oxide (e.g., LiNi_{1-y-z}Co_{y}Al_{z}O₂), a lithium manganese nickel composite oxide having a spinel structure (e.g., LiₓMn_{2-y}Ni_{y}O₄), a lithium phosphorus oxide having an olivine structure (e.g., LiₓFePO₄, LiₓMnPO₄, LiₓMn_{1-y}Fe_{y}PO₄, and LiₓCoPO₄), an iron sulfate (e.g., Fe₂(SO₄)₃), and a vanadium oxide (e.g., V₂O₅). In the above-described formula, the ranges of 0 < x ≤ 1, 0 < y ≤ 1, and 0 ≤ z ≤ 1 are preferably. As the active material, one of these compounds may be used singly, or combination of two or more of the compounds can be used.

Among these, a lithium manganese composite oxide (e.g., LiₓMn₂O₄), a lithium cobalt composite oxide (e.g., LiₓCoO₂), a lithium nickel cobalt composite oxide (e.g., LiNi_{1-y}CO_{y}O₂), a lithium manganese cobalt composite oxide (e.g., LiₓMn_{y}Co_{1-y}O₂), a lithium nickel cobalt manganese composite oxide (e.g., LiNi_{1-y-z}Co_{y}Mn_{z}O₂), and a lithium phosphorus oxide having an olivine structure (e.g., LiₓFePO₄, LiₓMnPO₄, LiₓMn_{1-y}Fe_{y}PO₄, and LiₓCₒPO₄) are preferable. In the above-described formula, the ranges of 0 < x ≤ 1, 0 ≤ y ≤ 1, and 0 ≤ z ≤ 1 are preferably.

The conductive agent can have the effect of improving the current collection performance and reducing the contact resistance of the positive electrode active material with the current collector. Examples of the conductive agent include carbonaceous substances such as acetylene black, carbon black, graphite, carbon nanofiber, and carbon nanotube. One of these carbonaceous substances may be used singly or plural carbonaceous substances may be used.

The binder can have the effect of binding the active material, the conductive agent, and the current collector. Examples of the binder include polytetrafluoroethylene (PTFE), polyvinylidene fluoride (PVdF), fluorine-based rubber, styrene butadiene rubber, acrylic resin, copolymers of acrylic resin, polyacrylic acid, and polyacrylonitrile.

As for the blending ratios of the positive electrode active material, the conductive agent and the binder in the positive electrode layer, it is preferable that the content of the positive electrode active material is from 80% by mass to 95% by mass, the content of the conductive agent is from 3% by mass to 18% by mass, and the content of the binder is from 2% by mass to 17% by mass. The amount of the conductive agent is set to 3% by mass or more, whereby the above-described effect can be obtained. The amount of the conductive agent is set to 18% by mass or less, whereby decomposition of a nonaqueous electrolyte at a surface of the conductive agent can be restrained during the storage at a high temperature. The amount of the binder is set to 2% by mass or more, whereby the sufficient strength of the electrode can be obtained. If the amount of the binder is set to 17% by mass, a content of the binder, which is an insulating material, in the positive electrode is decreased, and therefore, an internal resistance can be decreased.

The positive electrode current collector is preferably an aluminum foil, or an aluminum alloy foil containing one or more elements selected from Mg, Ti, Zn, Mn, Fe, Cu, and Si.

The positive electrode is produced by, for example, the following procedures. At first, a positive electrode active material, a conductive agent, and a binder are suspended in a solvent to prepare a slurry. The slurry is applied to one surface or both surfaces of a positive electrode current collector, and the coated film is dried. Thus, a positive electrode active material-containing layer can be obtained. And then, the layer is subjected to a pressing. Alternatively, a positive electrode active material, a conductive agent, and a binder are formed into pellets, and then, the pellets can be arranged on the positive electrode current collector to produce a positive electrode active material-containing layer.

### (3) Gel Nonaqueous Electrolyte

The gel nonaqueous electrolyte is prepared, for example, by preparing a mixture including a polymer material which is subjected to gelation and a premixture (liquid electrolyte) including an organic solvent and electrolyte, and gelling the polymer material.

The liquid electrolyte and the polymer material are preferably mixed at, for example, a volume ratio of 1 : 1 to 1 : 3.

The polymer material which is subjected to the gelation may include, for example, polyethylene oxide (PEO), polyacrylonitrile (PAN), polymethyl methacrylate (PMMA), and polyvinylidene fluoride (PVdF). Of these, PAN, PMMA, and PVdF are preferable. These polymers may be used as a copolymer. For example, PVdF may be used as a copolymer with hexafluoropropylene (HFP). As a monomer, various monomers each including a functional group can be used.

The polymer material is reacted with the liquid electrolyte, a polymerization initiator, and a cross-linking agent to become the gel electrolyte. The polymerization reaction can be initiated by a polymerization-initiating treatment which varies depending on the polymerization initiator.

As the polymerization initiator, peroxides such as benzoyl peroxide, or azo compounds such as azobisisobutyronitrile can be used.

The cross-linking agent may include, for example, ethylene glycol dimethacrylate, N,N'-methylene bisacrylamide, and the like.

Examples of the electrolyte include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bistrifluoromethylsulfonylimide (LiN(CF₃SO₂)₂). One electrolyte of these electrolytes can be used alone, or two or more electrolytes of these electrolytes can be used in mixture. The electrolyte preferably includes LiPF₆.

Examples of the organic solvent include a cyclic carbonate such as propylene carbonate (PC), ethylene carbonate (EC), or vinylene carbonate; a chain carbonate such as diethyl carbonate (DEC), dimethyl carbonate (DMC), or methyl ethyl carbonate (MEC); a cyclic ether such as tetrahydrofuran (THF), 2-methyl tetrahydrofuran (2MeTHF), or dioxolane (DOX); a chain ether such as dimethoxy ethane (DME) or diethoxy ethane (DEE); acetonitrile (AN), and sulfolane (SL). One of these organic solvents can be used alone or two or more solvent can be used as a mixed solvent.

More preferred examples of organic solvent include a mixed solvent which is prepared by mixing two or more solvent selected from the group consisting of propylene carbonate (PC), ethylene carbonate (EC), diethyl carbonate (DEC), dimethyl carbonate (DMC), and methyl ethyl carbonate (MEC). By using such a mixed solvent, a nonaqueous electrolyte battery which is excellent in charge-and-discharge-cycle characteristics can be obtained.

The electrolyte concentration in the gel nonaqueous electrolyte is preferably within a range of 0.5 to 2.5 mol/L.

An additive may be appropriately added to the gel nonaqueous electrolyte.

### (4) Liquid Nonaqueous Electrolyte

As the liquid nonaqueous electrolyte, for example, a product obtained by dissolving the electrolyte and an additive in the organic solvent may be used. As each of the electrolyte, the additive and the organic solvent, one recited in the explanation of the gel nonaqueous electrolyte may be used. The liquid nonaqueous electrolyte may include the monomers for polymerization and the cross-linking agent, each of which are described above.

The electrolyte concentration in the liquid nonaqueous electrolyte is preferably within a range of 0.5 to 2.5 mol/L.

The nonaqueous electrolyte battery according to the first embodiment preferably includes the liquid nonaqueous electrolyte in a volume percent within a range of 40% to 60% relative to the gel nonaqueous electrolyte.

### (5) Separator

As the separator, for example, a porous film formed from materials such as polyethylene, polypropylene, polyethylene terephthalate, cellulose, and polyvinylidene fluoride (PVdF), nonwoven fabric made of synthetic resin or the like can be used. Further, a separator obtained by applying an inorganic compound to a porous film can also be used.

### (6) Container member

As the container member, for example, a bag-like container made of laminate film or a metallic container is used.

As the shape thereof, the flat shape, square shape, cylindrical shape, coin shape, button shape, sheet shape, and stack shape can be cited. It is needless to say that in addition to a small battery mounted on mobile electronic devices, the nonaqueous electrolyte battery may also be a large battery mounted on two-wheeled to four-wheeled automobiles.

As the laminate film, for example, a multilayer film in which a metal layer is sandwiched between resin films can be used. The laminate film used as a container member is not limited to one in which a metal layer is sandwiched between resin films, a multilayer film consisting of a metal layer and resin layers covered the metal layer can be also used.

The metal layer is preferably aluminum foil or aluminum alloy foil to reduce the weight thereof. The resin film is used to reinforce the metal layer. As the resin film, for example, a polymeric material such as polypropylene (PP), polyethylene (PE), nylon, and polyethylene terephthalate (PET) can be used. The laminate film can be formed into the shape of a container member by performing heat sealing. The laminated film preferably has a thickness of 0.2 mm or less.

The container made of metal can be formed from, for example, aluminum or an aluminum alloy. The aluminum alloy preferably includes an element such as magnesium, zinc, or silicon. On the other hand, the content of transition metal such as iron, copper, nickel, and chromium is preferably reduced to 100 ppm or less. Whereby, long-term reliability and heat dissipation properties in a high-temperature environment can remarkably be improved.

The wall thickness of the container made of metal is preferably 0.5 mm or less and particularly preferably 0.2 mm or less.

### (7) Negative Electrode Terminal

The negative electrode terminal is preferably formed from a material that is electrically stable at a potential in the range of 0.8 V to 3.0 V with respect to the oxidation-reduction potential of lithium, and has conductivity. More specifically, the negative electrode terminal is preferably formed from aluminum or an aluminum alloy including an element such as Mg, Ti, Zn, Mn, Fe, Cu, and Si. To reduce contact resistance with the negative electrode current collector, the negative electrode terminal is preferably formed from a material similar to that of the negative electrode current collector.

### (8) Positive electrode

The positive electrode terminal is preferably formed from a material that is electrically stable at a potential within the range of 3.0 V to 4.5 V with respect to the oxidation-reduction potential of lithium, and has conductivity. More specifically, the positive electrode terminal is preferably formed from aluminum or an aluminum alloy containing an element such as Mg, Ti, Zn, Mn, Fe, Cu, and Si. To reduce contact resistance with the positive electrode current collector, the positive electrode terminal is preferably formed from a material similar to that of the positive electrode current collector.

### [Production Method]

The nonaqueous electrolyte battery according to the first embodiment can be produced, for example, in the following procedures.

First, the positive electrode and the negative electrode are produced.

The positive electrode can be produced in the method described above.

The negative electrode can be produced, for example, in the following method.

First, the negative electrode active material, the conductive agent, and the binder are suspended in a solvent to prepare a slurry. The polymerization initiator as described above may be added to the prepared slurry.

Next, the slurry was coated on one surface or both surfaces of the negative electrode current collector. The coated film was dried, followed by pressing, whereby the negative electrode active material-containing layer can be formed.

In the negative electrode active material-containing layer, in order to adjust the ratio E₁/E₂ of the content of the gel nonaqueous electrolyte to a range of 0.1 ≤ E₁/E₂ ≤ 0.8, specifically, for example, the polymerization initiator can be contained in the negative electrode active material-containing layer, and a deviation may be made between the content of the polymerization initiator in one part facing the current collector and the content of the polymerization initiator in the other part facing the positive electrode, the one part and the other part being parts of the negative electrode active material-containing layer.

A specific example is shown below. First, a first slurry including the negative electrode active material, the conductive agent, the binder, and the polymerization initiator is prepared. The slurry is coated on the current collector, and the coated film is dried. Thus, the first negative electrode active material-containing layer can be formed. Next, a second slurry including the negative electrode active material, the conductive agent, the binder, and the polymerization initiator, wherein the content of the polymerization initiator is smaller than that in the first slurry, is prepared. Next, the second slurry is coated on the first negative electrode active material-containing layer, and the coated film is dried. Thus, the second negative electrode active material-containing layer can be formed. Next, the obtained product is pressed from the surface of the second negative electrode active material-containing layer toward the current collector, whereby the negative electrode can be obtained.

The negative electrode active material-containing layer is not limited to the layer only including the first negative electrode active material-containing layer and the second negative electrode active material-containing layer, and may including other layers.

Next, using the produced positive electrode, the produced negative electrode, and the separator, an electrode group is produced. The electrode group may have any form. For example, the electrode group may be a stacking-type electrode group formed by alternately stacking the multiple positive electrodes, the multiple negative electrodes, and the separators, which are provided between the positive electrode active material-containing layer and the negative electrode active material-containing layer, or may be a wound electrode group obtained by stacking the positive electrode, the negative electrode, and the separator which is provided between the positive electrode active material-containing layer and the negative electrode active material-containing layer to obtain a stack, and winding the thus obtained stack. The wound electrode group can be, for example, pressed into a flat shape.

Next, the produced electrode group is housed in a container. When a container provided with a lid provided with a positive electrode terminal and a negative electrode terminal is used, before the electrode group is housed, the positive electrode in the electrode group can be connected to the positive electrode terminal and the negative electrode can be connected to the negative electrode terminal.

Separately, a mixture including the liquid nonaqueous electrolyte, monomers which can be polymerized into the desired gel polymer material, and a cross-linking agent is prepared.

Next, the prepared mixture is poured into the container in which the electrode group is housed. Next, a treatment corresponding to the polymerization initiator contained in the negative electrode is performed, whereby the monomers are polymerized to be gelled. For example, as described in Examples below, if the content of the polymerization initiator in each of the first slurry and the second slurry and the amounts of the first slurry coated and the second slurry coated are adjusted when the negative electrode is produced, the ratio E₁/E₂ of the gel nonaqueous electrolyte in the negative electrode active material-containing layer can be adjusted to the range of 0.1 ≤ E₁/E₂ ≤ 0.8.

Finally, the container is sealed, whereby the nonaqueous electrolyte battery according to the first embodiment can be obtained.

### [Various Measurement Methods]

### [Thickness of Negative Electrode Active Material-Containing Layer]

The thickness of the negative electrode active material-containing layer is measured in the following procedures.

First, a battery to be measured is provided. Next, the provided battery is put into a discharged state. Here, the term "discharged state" refers to a state in which the battery is subjected to constant-current discharge at 0.2 C or less in a temperature environment of 25°C up to the discharge lower cut-off voltage. Next, the battery in the discharged state is put in a glove box filled up with argon gas, and the battery is disassembled in the glove box. A negative electrode, to be measured, is taken out from the disassembled battery. The taken electrode is washed with ethyl methyl carbonate, and dried.

Next, the thickness of the taken out negative electrode was measured. The thickness can be measured by performing a cross-section observation of the negative electrode using a scanning electron microscope (SEM).

### [Gel Nonaqueous Electrolyte Content in Negative Electrode Active Material-Containing Layer]

The content of the gel nonaqueous electrolyte in the negative electrode active material-containing layer is measured in the following procedures.

### (1) Identification of Gel Nonaqueous Electrolyte

First, the composition of the gel nonaqueous electrolyte included in the negative electrode active material-containing layer, whose thickness has been measured, is confirmed in the following procedures.

In order to extract the gel nonaqueous electrolyte from the negative electrode active material-containing layer, the gel nonaqueous electrolyte included in the negative electrode active material-containing layer is dissolved in dimethyl formamide. When the negative electrode active material and/or the conductive agent, which were included in the negative electrode active material-containing layer, are mixed with the solution, they are removed, for example, by filtration. The dimethyl formamide is evaporated from the solution in which the gel nonaqueous electrolyte is dissolved, whereby the gel nonaqueous electrolyte can be obtained.

The extracted gel nonaqueous electrolyte is subjected to a measurement by infrared absorption spectroscopy (IR spectroscopy). The identification of the polymer of the gel nonaqueous electrolyte included in the negative electrode active material-containing layer can be performed by the IR spectroscopy.

For example, when a peak derived from a carbon-fluorine bond is observed at around 1200 cm⁻¹ in the infrared absorption spectrum, it can be evaluated that the gel nonaqueous electrolyte includes polyvinylidene fluoride (PVdF). When a peak derived from a nitrile bond is observed at around 2200 cm⁻¹ in the infrared absorption spectrum, it can be evaluated that the gel nonaqueous electrolyte includes polyacrylonitrile (PAN). When a peak derived from a carbon-oxygen bond is observed at around 1750 cm⁻¹ in the infrared absorption spectrum, it can be evaluated that the gel nonaqueous electrolyte includes polymethyl methacrylate (PMMA). When a peak derived from a carbon-oxygen bond is observed at around 1100 cm⁻¹ in the infrared absorption spectra, it can be evaluated that the gel nonaqueous electrolyte includes polyethylene oxide (PEO).

### (2) GD-OES Measurement (A case where the gel nonaqueous electrolyte includes PVdF and/or PAN.)

When the gel nonaqueous electrolyte includes PVdF and/or PAN, the ratio E₁/E₂ of the content of the gel nonaqueous electrolyte is calculated using GD-OES measurement. Specifically, the measurement is performed in the following procedures.

First, the measurement is preformed from the first surface of the negative electrode active material-containing layer, whose thickness has been measured, toward the second surface by means of a glow discharge emission spectrochemical analysis method (GD-OES). An amount of F or N obtained at a depth of 0.1T, which is one-tenth of the thickness T, is defined as a content (E₁) of the gel nonaqueous electrolyte in the first part. A content of F or N obtained at a depth of 0.9T from the first surface is defined as a content (E₂) of the gel nonaqueous electrolyte in the second part.

From the thus measured contents E₁ and E₂ of the gel nonaqueous electrolyte, the ratio E₁/E₂ of the content of the gel nonaqueous electrolyte is calculated.

### (2) XPS Analysis (A case where the gel nonaqueous electrolyte includes PMMA and/or PEO)

When the gel nonaqueous electrolyte includes PMMA and/or PEO, an X-ray photoelectron spectroscopy (XPS) is used, instead of the GD-OES analysis.

First, the negative electrode active material-containing layer, whose thickness has been measured, is dug into from the first surface up to a depth of 0.1T, which is one-tenth of the thickness T, and the thus obtained surface is subjected to the XPS analysis. An area of a measured peak derived from the C-O bond at around 285 eV is defined as a content E₁ of the gel nonaqueous electrolyte.

Next, the negative electrode active material-containing layer is further dug into to a depth of 0.8T, which is eight-tenths of the thickness T. That is, the surface obtained by the digging is a part far from the first surface by a distance (or, depth or thickness) of 0.9T. The obtained surface is subjected to the XPS analysis. An area of a measured peak derived from the C-0 bond at 285 eV is defined as a content E₂ of the gel nonaqueous electrolyte.

From the thus measured contents E₁ and E₂ of the gel nonaqueous electrolyte, the ratio E₁/E₂ of the content of the gel nonaqueous electrolyte is calculated.

### [Identification of Titanium-Containing Oxide Contained in Negative Electrode Active Material-Containing Layer]

The titanium-containing oxide included in the negative electrode active material-containing layer can be identified in the following procedures.

First, in order to grasp the crystal state of the titanium-containing oxide, lithium ions are extracted from the titanium-containing oxide to be measured. In a case of the titanium-containing oxide containing lithium, which does not participate in the charge and discharge, in the structure, the "state in which lithium ions are extracted" herein refers to a state in which lithium which participates in the charge and discharge is extracted. For example, the titanium-containing oxide can be made into the state in which lithium ions are extracted by putting the battery into the complete discharged state. However, even if the battery is in the discharged state, there may be lithium ions remaining in the titanium-containing oxide. Accordingly, the analysis of the X-ray diffraction patterns should be performed while taking it into consideration.

Next, the battery in the state described above is disassembled in a glove box filled up with argon. The negative electrode is taken out from the disassembled battery. The negative electrode is washed with an appropriate solvent. For example, ethyl methyl carbonate may be used. If the washing is insufficient, an impurity phase including lithium carbonate or lithium fluoride may be mixed by the influence of lithium ions remaining in the negative electrode. In such a case, it is better to use an airtight container, according to which the measurement can be performed in an inert gas atmosphere.

The negative electrode, taken out as above, is cut into a cross-section using an ion milling apparatus. The cut cross-section of the negative electrode is observed using a scanning electron microscope (SEM). The sampling of samples is performed in an inert atmosphere such as argon or nitrogen so that the samples are not exposed to the air.

Some particles are randomly selected in an image observed by SEM with a magnification of 3000. In a case where it is difficult to measure the particle size in a magnification of 3000 because the particles are too small, the magnification may be increased. In such a case, the selection is performed so that the particle size distribution of the selected particles is as wide as possible.

Next, each particle selected is subjected to an elemental analysis according to an energy dispersive X-ray spectroscopy (EDX). This can specify kinds and contents of elements included in the particle selected other than Li. With respect to Li, information of a content of Li included in the active material in the negative electrode can be obtained by an inductively coupled plasma (ICP) emission spectroscopy described below.

Here, the procedures of the ICP analysis are described. First, a part of the negative electrode, which has been taken out from the battery to be measured, and washed, is put in an appropriate solvent, and ultrasonic waves are applied thereto. For example, the electrode is put in ethyl methyl carbonate in a glass beaker, and it is vibrated in an ultrasonic washer, whereby the negative electrode active material-containing layer can be peeled off from the negative electrode current collector. Next, the peeled negative electrode active material-containing layer is dried in a reduced pressure to dry it. The obtained negative electrode active material-containing layer is pulverized using a mortar to obtain a powder including the titanium-containing oxide to be measured, the conductive agent, the binder, and the like. The resulting powder is dissolved in an acid to produce a liquid sample including the titanium-containing oxide. At that time, hydrochloric acid, nitric acid, sulfuric acid or hydrogen fluoride may be used as the acid. The liquid sample is subjected to the ICP emission spectroscopy, whereby concentrations of elements in the titanium-containing oxide included in the electrode can be known.

Separately, the crystal structure of the titanium-containing oxide included in the negative electrode can be specified by an X-ray diffraction (XRD) measurement.

The XRD measurement of the negative electrode can be performed by cutting the negative electrode to be measured into an area which is similar to an area of a holder of a wide angel X-ray diffraction apparatus, directly attaching the resulting sample to the glass holder, and performing the measurement. At that time, XRDs of various kinds of metal foils of the negative electrode current collector have previously been measured, and what position a peak derived from the current collector appears is grasped. In addition, presence or absence of a peak in an agent such as the conductive agent or the binder has been previously perceived. When the peak in the current collector is overlapped with the peak in the titanium-containing oxide, it is desirable that the titanium-containing oxide is peeled off from the current collector, and then the measurement is performed. This is done because the overlapped peaks are separated from each other when the peak intensity is quantitatively measured. Of course, if these are known in advance, these operations can be omitted. The negative electrode may be physically peeled off, but it can be easily peeled off by applying ultrasonic waves thereto in a solvent. Using the thus recovered negative electrode, the wide angel X-ray diffraction measurement of the titanium-containing oxide included in the negative electrode can be performed.

The measurement is performed in a measurement range of 2θ = 10 to 90° using CuKα rays as a source of radiation, whereby an X-ray diffraction pattern can be obtained.

As the powder X-ray diffraction measurement apparatus, SmartLab, manufactured by Rigaku Corporation, is used. The measurement conditions are: Cu target; 45 kV 200 mA; Solar Slit: 5° in both incident light and reception light; step width: 0.02 degrees; scan speed: 20 degrees/minute; semiconductor detector: D/teX Ultra 250; sample plate holder: flat glass sample plate holder (thickness: 0.5 mm); measurement range: a range of 5° ≤ 2θ ≤ 90°. When another apparatus is used, a measurement using standard Si powder for powder X-ray diffraction is performed so that measurement results are equivalent to those described above, and the measurement is performed in conditions in which the peak intensity and the position of the peak top correspond to those in the apparatus described above.

The information concerning the crystal structure of the titanium-containing oxide included in the negative electrode can be obtained by the methods described above.

Next, the examples of the nonaqueous electrolyte battery according to the first embodiment will be more specifically described with reference to the drawings.

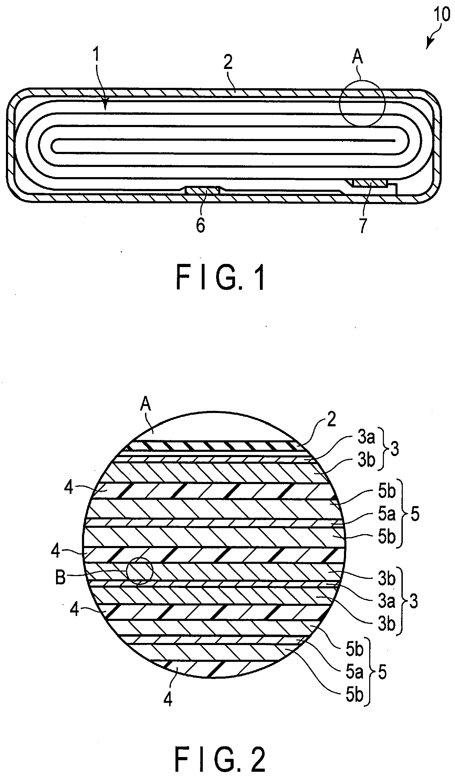

First, a nonaqueous electrolyte battery as an example according to the first embodiment will be described with reference to FIGS. 1 to 3.

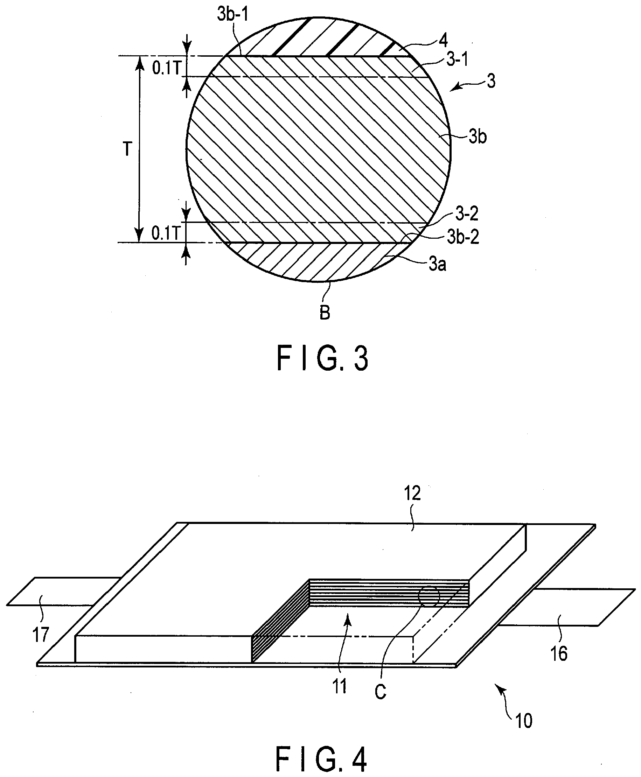

FIG. 1 is a schematic cross-sectional view of an example of a nonaqueous electrolyte battery according to a first embodiment. FIG. 2 is an enlarged cross-sectional view of a portion A in FIG. 1. FIG. 3 is an enlarged cross-sectional view of a portion B in FIG. 2;

A nonaqueous electrolyte battery 10 shown in FIGS. 1 to 3 includes a bag-shaped container member 2 shown in FIG. 1 and an electrode group 1 shown in FIGS. 1 and 2. The electrode group 1 is accommodated in the container member 2.

The bag-shaped container member 2 is made of a laminate film including two resin layers and a metal layer sandwiched between the resin layers.

As shown in FIG. 1, the electrode group 1 is a wound (coiled) electrode group in a flat form. The coiled electrode group 1 in a flat form is formed by, as shown in FIG. 2, spirally winding a stack which includes, from the outside to the inside, a negative electrode 3, a separator 4, a positive electrode 5, and a separator 4, and then press-forming the wound stack.

The negative electrode 3 includes a negative electrode current collector 3a and a negative electrode active material-containing layer 3b. A part of the negative electrode 3 located in the outermost layer has a configuration in which a negative electrode active material-containing layer 3b is formed on one surface which is the internal surface of a negative electrode current collector 3a as shown in FIG. 2. In the other portion of the negative electrode 3, the negative electrode active material-containing layers 3b are formed on both surfaces of the negative electrode current collector 3a.

As shown in FIG. 3, the negative electrode active material-containing layer includes a first surface 3b-1 which is in contact with the separator 4. As shown in FIG. 2, the negative electrode active material-containing layer 3b faces to the positive electrode 5 via the separator 4. Therefore, the first surface 3b-1 of the negative electrode active material-containing layer faces to the positive electrode 5. As shown in FIG. 3, the negative electrode active material-containing layer 3b also includes a second surface 3b-2 which is in contact with the negative electrode current collector 3a. The distance (thickness) between the first surface 3b-1 and the second surface 3b-2 of the negative electrode active material-containing layer 3b is, as shown in FIG. 3, T.

Although not shown in the drawings, the negative electrode active material-containing layer 3b includes titanium-containing oxide. Also, the negative electrode active material-containing layer 3b contains, although not shown in the drawings, a gel nonaqueous electrolyte. A first part 3-1 extending up to a distance 0.IT (or having a depth of 0.1T) from the first surface 3b-1 of the negative electrode active material-containing layer 3b as shown in FIG. 3 contains the gel nonaqueous electrolyte in a content E₁. The other hand, a second part 3-2 extending up to a distance 0.1T (or having a depth of 0.1T) from the second surface 3b-2 of the negative electrode active material-containing layer 3b contains the gel nonaqueous electrolyte in a content E₂.

The positive electrode 5 includes a positive electrode current collector 5a and positive electrode active material-containing layers 5b formed on both surfaces of the positive electrode current collector 5a.

The nonaqueous electrolyte battery shown in FIG. 1 to 3 further includes a liquid nonaqueous electrolyte (not shown). The electrode group 1 is impregnated with the liquid nonaqueous electrolyte. In other words, the liquid nonaqueous electrolyte is held in the electrode group 1.

As shown in FIG. 1, in the vicinity of the outer peripheral edge of the wound electrode group 1, a negative electrode terminal 6 is connected to the negative electrode current collector 3a in the outermost negative electrode 3, and a positive electrode terminal 7 is connected to the positive electrode current collector 5a in the inside positive electrode 5. The negative electrode terminal 6 and the positive electrode terminal 7 are extended out from the opening of the bag-shaped container member 2.

The nonaqueous electrolyte battery 10 shown in FIGS. 1 to 3 can be produced according to the following procedure, for example. First, an electrode group 1 is produced as described above. The electrode group 1 is then enclosed in a bag-shaped container member 2. At that time, one ends of a negative electrode terminal 6 and positive electrode terminal 7 are protruded toward the outside of the container member 2. Next, the circumference of the container member 2 is heat-sealed while a part thereof remains unsealed. Next, for example, a liquid nonaqueous electrolyte and monomers are injected into the bag-shaped container member 2 via the opening which is not heat-sealed. Next, the treatment adapted to a polymerization initiator contained in the negative electrode to polymerize the monomers, resulting in the gel nonaqueous electrolyte. Finally, the opening is heat-sealed, and thereby the wound electrode group 1 and the liquid nonaqueous electrolyte are completely sealed.

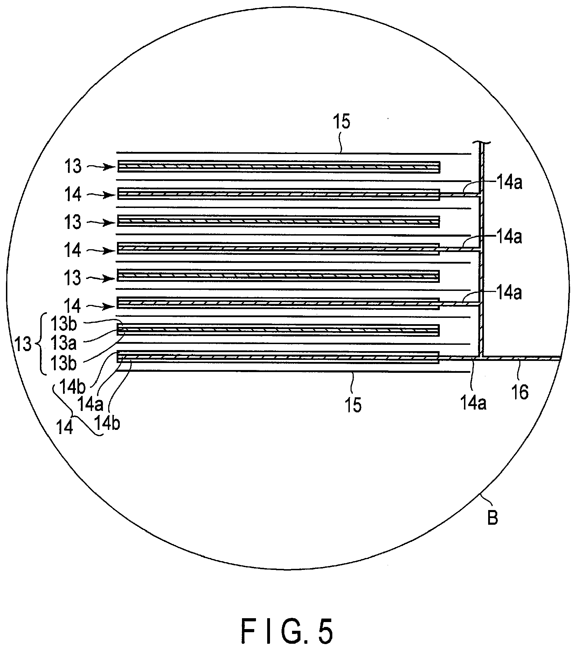

The nonaqueous electrolyte battery according to the first embodiment is not limited to the nonaqueous electrolyte battery as an example shown in FIGS. 1 to 3, and may be, for example, a battery having a structure shown in FIGS. 4 and 5.

FIG. 4 is a partially cutaway perspective view schematically showing another example of a nonaqueous electrolyte battery according to the first embodiment. FIG. 5 is an enlarged cross-sectional view of a portion C in FIG. 4.

A nonaqueous electrolyte battery 10 shown in FIGS. 4 and 5 includes an electrode group 11 shown in FIGS. 4 and 5, and a container member 12 shown in FIG. 4. The electrode group 11 is accommodated in the container member 12.

The container member 12 is made of a laminate film including two resin layers and a metal layer sandwiched between the resin layers.

As shown in FIG. 5, the electrode group 11 is a stacked-type electrode group. As shown in FIG. 5, the stacked-type electrode group 11 has a structure in which positive electrodes 13 and negative electrodes 14 are alternately laminated with a separator 15 sandwiched therebetween.

The electrode group 11 includes positive electrodes 13. Each of the positive electrodes 13 includes a positive electrode current collector 13a, and a positive electrode active material-containing layer 13b supported on each of the both surfaces of the positive electrode current collector 13a. The electrode group 11 includes negative electrodes 14. Each of the negative electrodes 14 includes a negative electrode current collector 14a, and a negative electrode active material-containing layer 14b supported on each of the both surfaces of the negative electrode current collector 14a. A part of the negative electrode current collector 14a of each of the negative electrodes 14 protrudes at one side from the positive electrode 13. The protruded part of the negative electrode current collector 14a is electrically connected to a strip-shaped negative electrode terminal 16. The tip of the strip-shaped negative electrode terminal 16 is extended out from the container member 12. Although not shown in the drawings, a part of the positive electrode current collector 13a of the positive electrode 13 protrudes from the positive electrode 13 at the side opposed to the protruded side of the negative electrode current collector 14a. The protruded part of the positive electrode current collector 13a from the positive electrode 13 is electrically connected to a strip-shaped positive electrode terminal 17. The tip of the strip-shaped positive electrode terminal 17 is opposed to the negative electrode terminal 16, and extended out from a side of the container member 12.

Although not shown in the drawings, the negative electrode active material-containing layer 14b includes a titanium-containing oxide. Also, the negative electrode active material-containing layer 14b is impregnated with a gel nonaqueous electrolyte (not shown), similarly to the negative electrode active material-containing layer 3b as described while referring FIG. 3.

The nonaqueous electrolyte battery shown in FIG. 4 and 5 further includes a liquid nonaqueous electrolyte (not shown). The electrode group 11 is impregnated with the liquid nonaqueous electrolyte.

According to the first embodiment, the nonaqueous electrolyte is provided. In the nonaqueous electrolyte battery according to the first embodiment, a ratio E₁/E₂ of a content of the gel nonaqueous electrolyte in a negative electrode active material-containing layer is within a range of 0.1 ≤ E₁/E₂ ≤ 0.8. Because of this, the depletion of the nonaqueous electrolyte in the negative electrode active material-containing layer can be suppressed. Furthermore, the excellent binding property between the negative electrode active material-containing layer and the negative electrode current collector can be exhibited. As a result, the nonaqueous electrolyte battery according to the first embodiment can exhibit an excellent cycle life property.

### (Second Embodiment)

According to a second embodiment, there is provided a battery pack. The battery pack includes the nonaqueous electrolyte battery according to the first embodiment.

The battery pack according to the second embodiment can include one or more nonaqueous electrolyte batteries (unit cells) according to the first embodiment described above. The nonaqueous electrolyte batteries can be electrically connected in series, in parallel, or with a combination of series connection and parallel connection. The nonaqueous electrolyte batteries can be electrically connected to constitute a battery module. The battery pack according to the second embodiment may include battery modules.

The battery pack according to the second embodiment may further include a protective circuit. The protective circuit has a function to control charging and discharging of the nonaqueous electrolyte battery. Alternatively, a circuit included in an equipment (for example, electronic devices, vehicles, and the like) where the battery pack serves as a power source may be used as the protective circuit for the battery pack.

Moreover, the battery pack according to the second embodiment may further include an external power distribution terminal. The external power distribution terminal is configured to externally output the current from the nonaqueous electrolyte battery, and to input the current to the nonaqueous electrolyte battery. In other words, when the battery pack is used as a power source, the current is externally provided via the external power distribution terminal. Also, when the battery pack is charged, the charging current (including regenerative energy caused by power of vehicles such as automobiles) is provided to the battery pack via the external power distribution terminal.

Next, a battery pack as an example according to the second embodiment will be described with reference to the drawings.

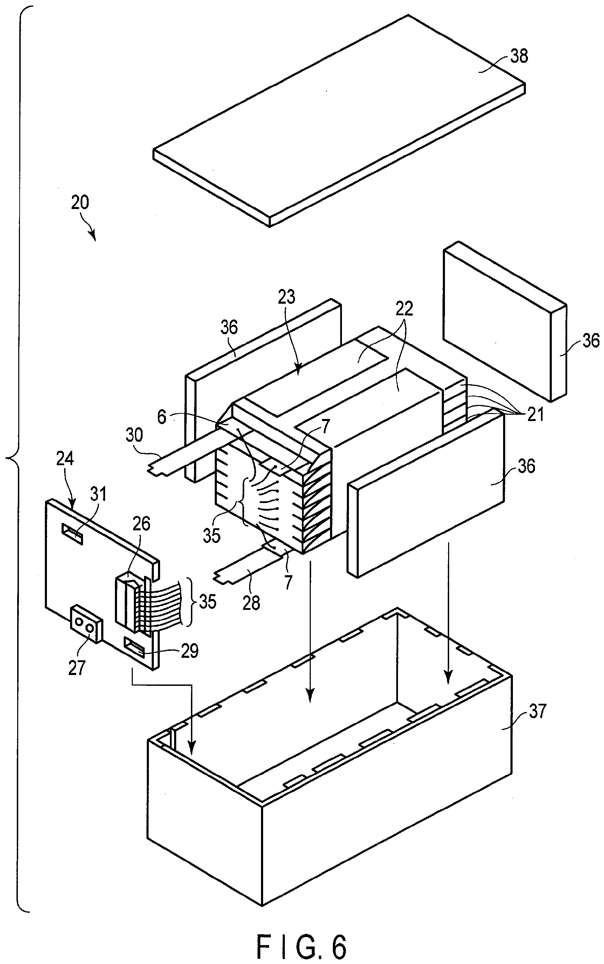

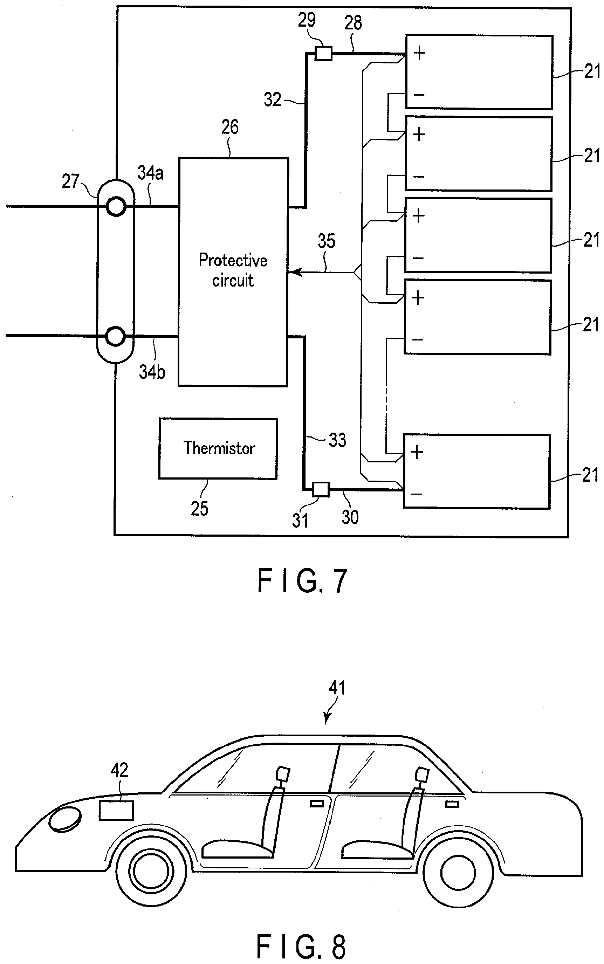

FIG. 6 is an exploded perspective view showing one example of a battery pack according to a second embodiment. FIG. 7 is a block diagram showing an electric circuit of the battery pack in FIG. 6.

A battery pack 20 shown in FIGS. 6 and 7 includes a plurality of unit cells 21. Each of the plurality of unit cells 21 is flat nonaqueous electrolyte battery 10 described with reference to FIGS. 1 to 3.

The plurality of unit cells 21 are stacked so that the negative electrode terminal 6 and the positive electrode terminal 7 extended outside are arranged in the same direction, and fastened with an adhesive tape 22 to constitute a battery module 23. The unit cells 21 are electrically connected to each other in series as shown in FIG. 7.

A printed wiring board 24 is arranged opposed to the side plane where the negative electrode terminal 6 and the positive electrode terminal 7 of the unit cell 21 are extended. A thermistor 25, a protective circuit 26, and a power distribution terminal 27 to an external device are mounted on the printed wiring board 24 as shown in FIG. 7. An electric insulating plate (not shown) is attached to the surface of the printed wiring board 24 facing the battery module 23 to avoid unnecessary connection of the wiring of the battery module 23.

A positive electrode-side lead 28 is connected to the positive electrode terminal 7 located at the bottom layer of the battery module 23 and the distal end of the lead 28 is inserted into a positive electrode-side connector 29 of the printed wiring board 24 so as to be electrically connected. An negative electrode-side lead 30 is connected to the negative electrode terminal 6 located at the top layer of the battery module 23 and the distal end of the lead 30 is inserted into an negative electrode-side connector 31 of the printed wiring board 24 so as to be electrically connected. The connectors 29 and 31 are connected to the protective circuit 26 through wiring 32 and 33 formed in the printed wiring board 24.

The thermistor 25 detects the temperature of the unit cells 21 and the detection signal is sent to the protective circuit 26. The protective circuit 26 can shut down a plus-side wiring 34a and a minus-side wiring 34b between the protective circuit 26 and the power distribution terminal 27 to an external device under a predetermined condition. The predetermined condition indicates, for example, the case where the temperature detected by the thermistor 25 becomes a predetermined temperature or more. Another example of the predetermined condition indicates the case where the over-charge, over-discharge, or over-current of the unit cells 21 is detected. The detection of the over-charge and the like is performed on each of the unit cells 21 or the whole of the battery module 23. When each of the unit cells 21 is detected, the cell voltage may be detected, or positive electrode or negative electrode potential may be detected. In the case of the latter, a lithium electrode to be used as a reference electrode is inserted into each of the unit cells 21. In the case of the battery pack 20 of FIGS. 6 and 7, wiring 35 for voltage detection is connected to each of the unit cells 21. Detection signals are sent to the protective circuit 26 through the wiring 35.

Protective sheets 36 including rubber or resin are arranged on three side planes of the battery module 23 except the side plane from which the positive electrode terminals 7 and the negative electrode terminals 6 are protruded.

The battery module 23 is housed in a housing container 37 together with each of the protective sheets 36 and the printed wiring board 24. That is, the protective sheets 36 are arranged on both internal surfaces in a long side direction and on one internal surface in a short side direction of the housing container 37. The printed wiring board 24 is arranged on the other internal surface in a short side direction. The battery module 23 is located in a space surrounded by the protective sheets 36 and the printed wiring board 24. A lid 38 is attached to the upper surface of the housing case 37.

In order to fix the battery module 23, a heat-shrinkable tape may be used in place of the adhesive tape 22. In this case, the battery module is bound by placing the protective sheets on the both sides of the battery module, revolving the heat-shrinkable tape, and thermally shrinking the heat-shrinkable tape.

In FIGS. 6 and 7, the structure in which the unit cells 21 are connected to each other in series is shown. In order to increase the battery capacity, the unit cells may be connected to each other in parallel. Alternatively, the unit cells may be connected to each other with a combination of series connection and parallel connection Furthermore, the assembled battery packs can be connected to each other in series and/or in parallel.

The aspect of the battery pack according to the second embodiment may be appropriately changed depending on its application. The applications of the battery pack according to the second embodiment are preferably those for which cycle characteristics when large-current is taken out are desired. Specific examples of these applications include application as a battery of a digital camera and application to a vehicle such as a two- or four-wheeled hybrid electric vehicle, a two- or four-wheeled electric vehicle or a power-assisted bicycle. Particularly preferably, the battery pack according to the second embodiment is used for a battery mounted to a vehicle.

In a vehicle having the battery pack according to the second embodiment mounted, the battery pack is configured to, for example, recover regenerative energy caused by power of the vehicle. Examples of the vehicle include two to four-wheeled hybrid electric automobiles, two to four-wheeled electric automobiles, electric assist bicycles, and trains (electric trains).

FIG. 8 shows an example of an automobile which includes a battery pack according to the second embodiment.

The automobile 41 shown in FIG. 8 includes a battery pack 42 which is an example of the battery pack according to the second embodiment mounted in its engine compartment. The mounting position is not limited to engine compartments. For example, the battery pack may also be mounted in rear parts of automobiles or under seats.

The battery pack according to the second embodiment includes the nonaqueous electrolyte battery according to the second embodiment. Therefore, the battery pack according to the second embodiment can exhibit excellent cycle life performance.

### [EXAMPLES]

Examples will be explained below, but the present invention is not limited to the Examples described below without departing from the scope of the invention.

### (EXAMPLE 1)

In Example 1, a nonaqueous electrolyte battery of Example 1 was produced in the following procedures.

### [Production of Positive Electrode]

First, lithium-nickel-cobalt-manganese composite oxide LiNi_{0.34}Co_{0.33}Mn_{0.33}O₂, carbon black, graphite, and polyvinylidene fluoride (PVdF) were prepared. They were dispersed at a mass ratio of the lithium-nickel-cobalt-manganese composite oxide : the carbon black : the graphite : the PVdF of 90% by mass : 3% by mass : 3% by mass : 4% by mass, in N-methyl-2-pyrrolidone (NMP) to prepare a slurry. The slurry was coated on an aluminum foil, the coated film was dried, which was subjected to rolling, thereby producing a positive electrode having an electrode density (excluding the current collector) of 3.0 g/cm³.

### [Production of Negative Electrode]

First, a powder of orthorhombic Na-containing niobium-titanium composite oxide Li₂Na_{1.7}Ti_{5.7}Nb_{0.3}O₁₄, acetylene black, polyvinylidene fluoride (PVdF), and azobisisobutyronitrile as a polymerization initiator were provided.

The orthorhombic Na-containing niobium-titanium composite oxide Li₂Na_{1.7}Ti_{5.7}Nb_{0.3}O₁₄ was obtained in the following procedures.

First, as starting materials, a powder of titanium dioxide TiO₂, a powder of lithium carbonate Li₂CO₃, a powder of sodium carbonate Na₂CO₃, and a powder of niobium (V) hydroxide Nb(OH)₅ were mixed at a molar ratio of Li : Na : Ti : Nb of 2 : 1.7 : 5.7 : 0.3. Next, the mixture of the starting materials was heat-treated at 950°C over 5 hours in the air atmosphere to obtain a powdery product. The product was subjected to a composition analysis according to ICP, and it was found that the powdery product was a powder of Li₂Na_{1.7}Ti_{5.7}Nb_{0.3}O₁₄.

They were added to N-methyl-2-pyrrolidon.e (NMP) at a mass ratio of the powder of Li₂Na_{1.7}Ti_{5.7}Nb_{0.3}O₁₄ : acetylene black : PVdF : azobisisobutyronitrile of 90% by mass : 5% by mass : 4% by mass : 1% by mass, and mixed by using a planetary centrifugal mixer to prepare a first slurry.

The first slurry was coated on both surfaces of a current collector formed of an aluminum foil having a thickness of 15 µm, and the coated films were dried. An amount of the slurry coated was 50 g/m². Thus, the first negative electrode active material-containing layer was obtained.

On the other hand, the powder of the Na-containing niobium-titanium composite oxide, the acetylene black, the polyvinylidene fluoride, and the azobisisobutyronitrile, which had previously been provided, were added to N-methyl-2-pyrrolidone (NMP) at a mass ratio of 90% by mass : 5.8% by mass : 4% by mass : 0.2% by mass, and mixed by using a planetary centrifugal mixer to prepare a second slurry. The second slurry was coated on the first negative electrode active material-containing layers, which had been previously obtained, and the coated films were dried. An amount of the second slurry coated was adjusted so that the total amount of the amount of the first slurry coated for the first negative electrode active material-containing layer and the amount of the second slurry coated here was 100 g/m². Thus, the second negative electrode active material-containing layer was obtained.

Next, the first negative electrode active material-containing layer and the second negative electrode active material-containing layer were pressed from the surface of the second negative electrode active material-containing layer toward the current collector, thereby producing a negative electrode having an electrode density (excluding the current collector) of 2.3 g/cm³.

### [Production of Electrode Group]

The positive electrode, a separator formed of a polyethylene porous film having a thickness of 25 µm, the negative electrode, and another separator were stacked in this order to obtain a stack. The stack was spirally wound. A core was pulled out from the wound stack, and then the resulting wound stack was subjected to hot-press at 60°C. Thus, a flat electrode group having a width of 30 mm and a thickness of 3.0 mm was produced.

The obtained electrode group was housed in a container formed of a laminate film, and then was subjected to vacuum-drying at 70°C for 24 hours. The laminate film used for the container was formed of an aluminum foil having a thickness of 40 µm and polypropylene layers formed on both surfaces of the aluminum foil. The laminate film has a thickness of 0.1 mm as a whole.

### [Preparation of Liquid Nonaqueous Electrolyte]

First, propylene carbonate (PC) and ethyl methyl carbonate (MEC) were mixed at a volume ratio of 1 : 2. With the mixture were further mixed methyl methacrylate as a polymerizable monomer, and ethylene glycol dimethacrylate as a cross-linking agent to obtain a mixed solvent. In the mixed solvent was dissolved 1 M of LiPF₆, which was the electrolyte to prepare a liquid nonaqueous electrolyte.

### [Production of Nonaqueous Electrolyte Secondary Battery]

The liquid nonaqueous electrolyte thus prepared was injected into the laminate film container in which the electrode group is housed. Next, the container was heated at 80°C for 3 hours to polymerize the monomer in the liquid nonaqueous electrolyte, thus resulting in the gel nonaqueous electrolyte.

After that, the container was completely sealed by heat-sealing. Thus, a nonaqueous electrolyte battery of Example 1 was produced which had a width of 35 mm, a thickness of 3.2 mm, and a height of 65 mm.

### [Measurement of Capacity]

The capacity of the produced nonaqueous electrolyte battery of Example 1 was measured in the following procedures.

First, the nonaqueous electrolyte battery of Example 1 was charged at a constant current of 50 mA in an environment having a temperature of 25°C until the battery voltage reached 3.2 V. Subsequently, the nonaqueous electrolyte battery of Example 1 was discharged at a constant voltage of 3.2 V until the current value reached 20 mA.

The discharge was performed in a constant current mode. Specifically, the nonaqueous electrolyte battery of Example 1 was discharged at a constant current of 50 mA until the battery voltage reached 1.8 V, whereby a capacity of the nonaqueous electrolyte battery of Example 1 was measured. A discharge capacity of 400 mAh was obtained by this discharge.

### [Charge-and-Discharge Cycle Test]

Next, a charge-and-discharge cycle test in an environment having a temperature of 45°C was performed using the nonaqueous electrolyte battery of Example 1 in the following procedures. In the charge-and-discharge cycle test described below, 1 C in the nonaqueous electrolyte battery of Example 1 was determined as 400 mA, because the discharge capacity of 400 mAh was obtained in the capacity confirmation described above.

The charge was performed in a constant-current and constant-voltage. Specifically, the nonaqueous electrolyte battery of Example 1 was charged at a constant-current of 1 C, until the battery voltage reached 3.2 V. Subsequently, the nonaqueous electrolyte battery of Example 1 was discharged at a constant voltage of 3.2 V for a shorter period of either a period until the current value reaches 0.05 C or 3 hours.

The discharge was performed in a constant current mode. Specifically, the nonaqueous electrolyte battery of Example 1 was discharged at a constant current of 1 C until the battery voltage reached 1.8 V.

A set of the charge and the discharge described above was defined as one charge-and-discharge cycle. The charge-and-discharge cycle was repeated 500 times. There were 5 minute pauses between the charge and the discharge, and between the discharge and the charge.

The nonaqueous electrolyte battery of Example 1 was subjected to the charge-and-discharge cycle 500 times, and then a discharge capacity thereof was measured. The obtained value was divided by the discharge capacity at the first cycle in the charge-and-discharge cycle test, to obtain a capacity retention ratio of the nonaqueous electrolyte battery of Example 1 after the 500 cycles at 45°C. The capacity retention ratio after the 500 cycles at 45°C is an indicator of a cycle lifetime property of a nonaqueous electrolyte battery.

### (EXAMPLE 2)

In Example 2, a nonaqueous electrolyte battery of Example 2 was produced in the same manner as in Example 1, except that a positive electrode was produced as described below using a powder of lithium cobaltate LiCoO₂, instead of the powder of the lithium-nickel-cobalt-manganese composite oxide.

In Example 2, 90% by mass of lithium cobaltate, 3% by mass of carbon black, 3% by mass of graphite, and 4% by mass of PVdF were dispersed in N-methyl-2-pyrrolidone (NMP) to prepare a positive electrode slurry. The slurry was coated on the aluminum foil, the coated film was dried, which was subjected to rolling, thereby producing a positive electrode having an electrode density (excluding the current collector) of 3.0 g/cm³.

### (EXAMPLE 3)

In Example 3, a nonaqueous electrolyte battery of Example 3 was produced in the same manner as in Example 1, except that a positive electrode was produced as described below using a powder of aluminum-containing lithium manganate LiMn_{1.8}Al_{0.2}O₄, instead of the powder of the lithium-nickel-cobalt-manganese composite oxide.

In Example 3, 90% by mass of a powder of aluminium-containing lithium manganate, 3% by mass of carbon black, 3% by mass of graphite, and 4% by mass of PVdF were dispersed in N-methyl-2-pyrrolidone (NMP) to prepare a positive electrode slurry. The slurry was coated on the aluminum foil, the coated film was dried, which was subjected to rolling, thereby producing a positive electrode having an electrode density (excluding the current collector) of 2.7 g/cm³.

### (EXAMPLE 4)

In Example 4, a nonaqueous electrolyte battery of Example 4 was produced in the same manner as in Example 1, except that a positive electrode was produced as described below using a powder of olivine-type lithium-manganese-iron-magnesium composite phosphate LiMn_{0.8}Fe_{0.15}Mg_{0.05}PO4, instead of the powder of the lithium-nickel-cobalt-manganese composite oxide.

In Example 4, 88% by mass of a powder of olivine-type lithium-manganese-iron-magnesium composite phosphate, 3% by mass of carbon black, 3% by mass of graphite, and 6% by mass of PVdF were dissolved in N-methyl-2-pyrrolidone (NMP) to prepare a positive electrode slurry. The slurry was coated on the aluminum foil, the coated film was dried, which was subjected to rolling, thereby producing a positive electrode having an electrode density (excluding the current collector) of 2.0 g/cm³.

### (EXAMPLE 5)

In Example 5, a nonaqueous electrolyte battery of Example 5 was produced in the same manner as in Example 1, except that a negative electrode was produced in the following procedures using a powder of niobium-titanium composite oxide TiNb₂O₇, instead of the powder of Na-containing niobium-titanium composite oxide.

In Example 5, first, 90% by mass of a powder of niobium-titanium composite oxide, 5% by mass of acetylene black, 4% by mass of PVdF, and 1% by mass of azobisisobutyronitrile as the polymerization initiator were added to N-2-methylpyrrolidone (NMP) and mixed using a planetary centrifugal mixer to prepare a first slurry. The first slurry was coated on both surfaces of a current collector formed of an aluminum foil having a thickness of 15 µm, and the coated films were dried. The amount of the slurry coated was 25 g/m². Thus, a first negative electrode active material-containing layer was obtained.

Next, 90% by mass of a powder of niobium-titanium composite oxide, 5.8% by mass of acetylene black, 4% by mass of PVdF, and 0.2% by mass of azobisisobutyronitrile were added to NMP and mixed by using a planetary centrifugal mixer to prepare a second slurry.

The second slurry was coated on the first negative electrode active material-containing layer, which had been previously obtained, and the coated film was dried. The amount of the second slurry coated was adjusted so that the total amount of the amount of the first slurry coated for the first negative electrode active material-containing layer and the amount of the second slurry coated here was 50 g/m². Thus, a second negative electrode active material-containing layer was obtained.

Next, the first negative electrode active material-containing layer and the second negative electrode active material-containing layer were pressed from the surface of the second negative electrode active material-containing layer toward the current collector, thereby producing a negative electrode having an electrode density (excluding the current collector) of 2.6 g/cm³.

### (EXAMPLE 6)

In Example 6, a nonaqueous electrolyte battery of Example 6 was produced in the same manner as in Example 1, except that a positive electrode was produced in the following procedures further using a powder of lithium cobaltate LiCoO₂, and that a negative electrode was produced in the same manner as in Example 5.

In Example 6, 70% by mass of a powder of lithium-nickel-cobalt-manganese composite oxide, 20% by mass of a powder of lithium cobaltate, 3% by mass of carbon black, 3% by mass of graphite, and 4% by mass of PVdF were dispersed in N-methyl-2-pyrrolidone (NMP) to prepare a positive electrode slurry. The slurry was coated on the aluminum foil, the coating film was dried, and then was subjected to rolling, thereby producing a positive electrode having an electrode density (excluding the current collector) of 3.0 g/cm³.

### (EXAMPLE 7)

In Example 7, a nonaqueous electrolyte battery of Example 7 was produced in the same manner as in Example 1, except that a positive electrode was produced as described below further using a powder of aluminum-containing lithium manganate LiMn_{1.8}Al_{0.2}O₄, and that a negative electrode was produced in the same manner as in Example 5.

In Example 7, 70% by mass of a powder of lithium-nickel-cobalt-manganese composite oxide, 20% by mass of a powder of aluminum-containing lithium manganate, 3% by mass of carbon black, 3% by mass of graphite, and 4% by mass of PVdF were dispersed in N-methyl-2-pyrrolidone (NMP) to prepare a positive electrode slurry. The slurry was coated on the aluminum foil, the coated film was dried, and then was subjected to rolling, thereby producing a positive electrode having an electrode density (excluding the current collector) of 3.0 g/cm³.

### (EXAMPLE 8)

In Example 8, a nonaqueous electrolyte battery of Example 8 was produced in the same manner as in Example 1, except that a positive electrode was produced in the following procedures further using a powder of olivine-type lithium-manganese-iron-magnesium composite phosphate LiMn_{0.8}Fe_{0.15}Mg_{0.05}PO₄, and that a negative electrode was produced in the same manner as in Example 5.

In Example 8, 70% by mass of a powder of lithium-nickel-cobalt-manganese composite oxide, 20% by mass of a powder of olivine-type lithium-manganese-iron-magnesium composite phosphate, 3% by mass of carbon black, 3% by mass of graphite, and 4% by mass of PVdF were dispersed in N-methyl-2-pyrrolidone (NMP) to prepare a positive electrode slurry. The slurry was coated on the aluminum foil, the coated film was dried, and then was subjected to rolling, thereby producing a positive electrode having an electrode density (excluding the current collector) of 2.5 g/cm³.

### (EXAMPLE 9)

In Example 9, a nonaqueous electrolyte battery of Example 9 was produced in the same manner as in Example 1, except that a negative electrode is produced in the following procedures using a powder of monoclinic titanium dioxide TiO₂(B), instead of the Na-containing niobium-titanium composite oxide.

In Example 9, first, 90% by mass of a powder of monoclinic titanium dioxide, 5% by mass of acetylene black, 4% by mass of PVdF, and 1% by mass of azobisisobutyronitrile as the polymerization initiator, were added to N-2-methylpyrrolidone (NMP) and mixed by using a planetary centrifugal mixer to prepare a first slurry was prepared using a rotating and revolving mixer. The first slurry was coated on both surfaces of a current collector formed of an aluminum foil having a thickness of 15 µm, and the coated films were dried. The amount of the slurry coated was 30 g/m². Thus, a first negative electrode active material-containing layer was obtained.

Next, 90% by mass of a powder of niobium-titanium composite oxide, 5.8% by mass of acetylene black, 4% by mass of PVdF, and 0.2% by mass of azobisisobutyronitrile were added to NMP and mixed by the using planetary centrifugal mixer to prepare a second slurry was prepared using the rotating and revolving mixer.

The second slurry was coated on the first negative electrode active material-containing layer, which had been previously obtained, and the coated film was dried. The amount of the second slurry coated was adjusted so that the total amount of the amount of the first slurry coated for the first negative electrode active material-containing layer and the amount of the second slurry coated here was 60 g/m². Thus, a second negative electrode active material-containing layer was obtained.

Next, the first negative electrode active material-containing layer and the second negative electrode active material-containing layer were pressed from the surface of the second negative electrode active material-containing layer toward the current collector, thereby producing a negative electrode having an electrode density (excluding the current collector) of 2.0 g/cm³.

### (EXAMPLE 10)

In Example 10, a nonaqueous electrolyte battery of Example 10 was produced in the same manner as in Example 1, except that a positive electrode was produced in the same manner as in Example 7 and that a negative electrode was produced in the same manner as in Example 9.

### (EXAMPLE 11)

In Example 11, a nonaqueous electrolyte battery of Example 11 was produced in the same manner as in Example 1, except that a positive electrode was produced in the following procedures using a powder of aluminum-containing lithium manganate LiMn_{1.8}Al_{0.2}O₄ and a powder of olivine-type lithium-manganese-iron-magnesium composite phosphate LiMn_{0.8}Fe_{0.15}Mg_{0.05}PO₄, instead of the powder of lithium-nickel-cobalt-manganese composite oxide, and that a negative electrode was produced in the same manner as in Example 9.

In Example 11, 45% by mass of a powder of aluminum-containing lithium manganate, 45% by mass of a powder of olivine-type lithium-manganese-iron-magnesium composite phosphate, 3% by mass of carbon black, 3% by mass of graphite, and 4% by mass of PVdF were dispersed in N-methyl-2-pyrrolidone (NMP) to prepare a positive electrode slurry. The slurry was coated on the aluminum foil, the coated film was dried, and then was subjected to rolling, thereby producing a positive electrode having an electrode density (excluding the current collector) of 2.3 g/cm³.

### (EXAMPLE 12)

Example 12, a nonaqueous electrolyte battery of Example 12 was produced in the same manner as in Example 1, except that a positive electrode was produced using a powder of lithium cobaltate LiCoO₂, and a powder of olivine-type lithium-manganese-iron-magnesium composite phosphate LiMn_{0.8}Fe_{0.15}Mg_{0.05}PO₄, instead of the powder of lithium-nickel-cobalt-manganese composite oxide, and that a negative electrode was produced in the same manner as in Example 9.

In Example 12, 20% by mass of a powder of lithium cobaltate, 70% by mass of a powder of olivine-type lithium-manganese-iron-magnesium composite phosphate, 3% by mass of carbon black, 3% by mass of graphite, and 4% by mass of PVdF were dispersed in N-methyl-2-pyrrolidone (NMP) to prepare a positive electrode slurry. The slurry was coated on the aluminum foil, the coated film was dried, and then was subjected to rolling, thereby producing a positive electrode having an electrode density (excluding the current collector) of 2.1 g/cm³.

### (EXAMPLE 13)

In Example 13, a nonaqueous electrolyte battery of Example 13 was produced in the same manner as in Example 1, except that a positive electrode and the negative electrode were produced in the following procedures.

### [Production of Positive Electrode]

In Example 13, a powder of lithium cobaltate LiCoO₂, and a powder of aluminum-containing lithium manganate LiMn_{1.8}Al_{0.2}O₄ were used instead of the powder of lithium-nickel-cobalt-manganese composite oxide in Example 1.

In Example 13, 20% by mass of a powder of lithium cobaltate, 70% by mass of LiMn_{1.8}Al_{0.2}O₄, 3% by mass of carbon black, 3% by mass of graphite, and 4% by mass of PVdF were dispersed in N-methyl-2-pyrrolidone (NMP) to prepare a slurry. The slurry was coated on the aluminum foil, the coated film was dried, and then was subjected to rolling, thereby producing a positive electrode having an electrode density of 2.7 g/cm³.

### [Production of Negative Electrode]

In Example 13, a negative electrode was produced in the same manner as in Example 1, except that a powder of orthorhombic Na-containing niobium-titanium composite oxide Li₂Na_{1.5}Sr_{0.2}Ti_{5.9}Nb_{0.1}O₁₄ was used as the powder of titanium-containing oxide, and the following procedures were adopted. The powder was prepared in the following procedures.

First, as a starting material, a powder of titanium dioxide TiO₂, a powder of strontium nitrate Sr(NO₃)₂, a powder of lithium carbonate Li₂CO₃, a powder of sodium carbonate Na₂CO₃, and a powder of niobium (V) hydroxide Nb(OH)₅ were mixed at a molar ratio of Li : Na : Sr : Ti : Nb of 2 : 1.5 : 0.2 : 5.9 : 0.1. The mixture of the starting materials was subjected to heat treatment at 950°C over 5 hours in the air atmosphere to obtain a powdery product. The product was subjected to a composition analysis according to ICP, and it was found the powdery product was a powder of Li₂Na_{1.5}Sr_{0.2}Ti_{5.9}Nb_{0.1}O₁₄.

In Example 13, 90% by mass of a powder of Li₂Na_{1.5}Sr_{0.2}Ti_{5.9}Nb_{0.1}O₁₄, 5% by mass of acetylene black, 4% by mass of polyvinylidene fluoride (PVdF), and 1% by mass of azobisisobutyronitrile as the polymerization initiator, were added to N-2-methylpyrrolidone (NMP), and mixed by using a planetary centrifugal mixer to prepare a first slurry. The first slurry was coated on both surfaces of a current collector formed of an aluminum foil having a thickness of 15 µm, and the coated films were dried. An amount of the slurry coated was 50 g/m². Thus, the first negative electrode active material-containing layer was obtained.

On the other hand, 90% by mass of a powder of Li₂Na_{1.5}Sr_{0.2}Ti_{5.9}Nb_{0.1}O₁₄, 5.8% by mass of acetylene black, 4% by mass of polyvinylidene fluoride (PVdF), and 0.2% by mass of azobisisobutyronitrile as the polymerization initiator, were added to N-methyl-2-pyrrolidone (NMP), and mixed by using a planetary centrifugal mixer to prepare a second slurry.

The second slurry was coated on the first negative electrode active material-containing layer, which had previously been obtained, and the coated film was dried. An amount of the second slurry coated was adjusted so that the total amount of the amount of the first slurry coated for the first negative electrode active material-containing layer and the amount of the second slurry coated here was 100 g/m². Thus, the second negative electrode active material-containing layer was obtained.

Next, the first negative electrode active material-containing layer and the second negative electrode active material-containing layer were pressed from the surface of the second negative electrode active material-containing layer toward the current collector, thereby producing a negative electrode having an electrode density (excluding the current collector) of 2.3 g/cm³.

### (EXAMPLE 14)

In Example 14, a nonaqueous electrolyte battery of Example 14 was produced in the same manner as in Example 1, except that a positive electrode was produced in the same manner as in Example 6, and a negative electrode was produced in the following procedures.

### [Production of Negative Electrode]

In Example 14, first, a powder of orthorhombic Na-containing niobium-titanium composite oxide Li₂Na_{1.7}Ti_{5.7}Nb_{0.3}O₁₄, to which carbon was attached on the surface thereof, was provided. The powder was obtained by adding the sodium-containing niobium-titanium composite oxide, used in Example 1, to an aqueous sucrose solution to obtain a mixture, stirring the mixture, drying it, and performing a heat-treatment at 700°C for one hour in a nitrogen atmosphere.

Next, 90% by mass of a powder of Li₂Na_{1.7}Ti_{5.7}Nb_{0.3}O₁₄, to which carbon was attached on the particle surface thereof, 5% by mass of acetylene black, 4% by mass of polyvinylidene fluoride (PVdF), and 1% by mass of azobisisobutyronitrile, as the polymerization initiator were added to N-methyl-2-pyrrolidone (NMP), and mixed by using a planetary centrifugal mixer to prepare a first slurry.

The first slurry was coated on both surfaces of a current collector formed of an aluminum foil having a thickness of 15 µm, and the coated films were dried. An amount of the slurry coated was 50 g/m². Thus, the first negative electrode active material-containing layer was obtained.

On the other hand, 90% by mass of a powder of Li₂Na_{1.7}Ti_{5.7}Nb_{0.3}O₁₄, to which carbon was attached on the particle surface thereof, 5.8% by mass of acetylene black, 4% by mass of polyvinylidene fluoride (PVdF), 0.2% by mass of azobisisobutyronitrileas the polymerization initiator were added to with N-methyl-2-pyrrolidone (NMP), and mixed by using a planetary centrifugal mixer to prepare a second slurry.

The second slurry was coated on the first negative electrode active material-containing layer, which had previously been obtained, and the coated film was dried. An amount of the second slurry coated was adjusted so that the total amount of the amount of the first slurry coated for the first negative electrode active material-containing layer and the amount of the second slurry coated here was 100 g/m². Thus, the second negative electrode active material-containing layer was obtained.

Next, the first negative electrode active material-containing layer and the second negative electrode active material-containing layer were pressed from the surface of the second negative electrode active material-containing layer toward the current collector, thereby producing a negative electrode having an electrode density (excluding the current collector) of 2.3 g/cm³.

### (EXAMPLE 15)

In Example 15, a nonaqueous electrolyte battery of Example 15 was produced in the same manner as in Example 1, except that a negative electrode was produced in the following procedures.

### [Production of Negative Electrode]

In Example 15, as the titanium-containing oxide, a powder of orthorhombic Na and Mg-containing niobium-titanium composite oxide Li₂Na_{1.5}Mg_{0.2}Ti_{5.9}Nb_{0.1}O₁₄, and a powder of orthorhombic Na and Zr-containing niobium-titanium composite oxide Li₂Na_{1.9}Ti_{5.8}Nb_{0.1}Zr_{0.1}O₁₄ were prepared.

The powder of composite oxide Li₂Na_{1.5}Mg_{0.2}Ti_{5.9}Nb_{0.1}O₁₄ was provided in the following procedures. First, as starting materials, a powder of titanium dioxide TiO₂, a powder of magnesium acetate Mg(CH₃COO)₂, a powder of lithium carbonate Li₂CO₃, a powder of sodium carbonate Na₂CO₃, and a powder of niobium (V) hydroxide Nb(OH)₅, were mixed at a molar ratio of Li : Na : Mg : Ti : Nb of 2 : 1.5 : 0.2 : 5.9 : 0.1. Next, the mixture of the starting materials was subjected to heat-treatment at 950°C over 5 hours in the air atmosphere to obtain a powdery product. The product was subjected to a composition analysis according to ICP, and it was found that the powdery product was a powder of composite oxide Li₂Na_{1.5}Mg_{0.2}Ti_{5.9}Nb_{0.1}O₁₄.

The powder of composite oxide Li₂Na_{1.9}Ti_{5.8}Nb_{0.1}Zr_{0.1}O₁₄ was provided in the following procedures. First, as starting materials, a powder of titanium dioxide TiO₂, a powder of zirconium oxide ZrO₂, a powder of lithium carbonate Li₂CO₃, a powder of sodium carbonate Na₂CO₃, and a powder of niobium (V) hydroxide Nb(OH)₅, were mixed at a molar ratio of Li : Na : Zr : Ti : Nb of 2 : 1.9 : 0.1 : 5.8 : 0.1. The mixture of the starting materials was subjected to heat-treatment at 950°C over 5 hours in the air atmosphere to obtain a powdery product. The product was subjected to a composition analysis according to ICP, and it was found that the powdery product was a powder of composite oxide, Li₂Na_{1.9}Ti_{5.8}Nb_{0.1}Zr_{0.1}O₁₄.

In Example 15, 90% by mass of a powder of Li₂Na_{1.5}Mg_{0.2}Ti_{5.9}Nb_{0.1}O₁₄, 5% by mass of acetylene black, 4% by mass of polyvinylidene fluoride (PVdF), and 1% by mass of azobisisobutyronitrile as the polymerization initiator were added to N-methyl-2-pyrrolidone (NMP), and mixed by using a planetary centrifugal mixer to prepare a first slurry. The first slurry was coated on both surfaces of a current collector formed of an aluminum foil having a thickness of 15 µm, and the coated films were dried. An amount of the slurry coated was 50 g/m². Thus, the first negative electrode active material-containing layer was obtained.

On the other hand, 90% by mass of a powder of Li₂Na_{1.9}Ti_{5.8}Nb_{0.1}Zr_{0.1}O₁₄, 5.8% by mass of acetylene black, 4% by mass of polyvinylidene fluoride (PVdF), and 0.2% by mass of azobisisobutyronitrile as the polymerization initiator were added to N-methyl-2-pyrrolidone (NMP), and mixed by using a planetary centrifugal mixer to prepare a second slurry.

The second slurry was coated on the first negative electrode active material-containing layer, which had previously been obtained, and the coated film was dried. An amount of the slurry coated was adjusted so that the total amount of the amount of the first slurry coated for the first negative electrode active material-containing layer and the amount of the second slurry coated here was 100 g/m². Thus, the second negative electrode active material-containing layer was obtained.

Next, the first negative electrode active material-containing layer and the second negative electrode active material-containing layer were pressed from the surface of the second negative electrode active material-containing layer toward the current collector, thereby producing a negative electrode having an electrode density (excluding the current collector) of 2.2 g/cm³.

### (EXAMPLE 16)

In Example 16, a nonaqueous electrolyte battery of Example 16 was produced in the same manner as in Example 1, except that a negative electrode was produced in the following procedures.

### [Production of Negative Electrode]

In Example 16, as the powder of the composite oxide, a powder of monoclinic Mo-containing niobium-titanium composite oxide Ti_{1.15}Nb_{1.7}Mo_{0.2}O₇ and a powder of monoclinic Ta-containing niobium-titanium composite oxide TiNb_{1.8}Ta_{0.2}O₇ were used.

Example 16, 90% by mass of a powder of Ti_{1.15}Nb_{1.7}MO_{0.2}O₇, 5% by mass of acetylene black, 4% by mass of polyvinylidene fluoride (PVdF), and 1% by mass of azobisisobutyronitrile as the polymerization initiator were added to N-methyl-2-pyrrolidone (NMP), and mixed by using a planetary centrifugal mixer to prepare a first slurry.

The first slurry was coated on both surfaces of a current collector formed of an aluminum foil having a thickness of 15 µm, and the coated films were dried. An amount of the slurry coated was 25 g/m². Thus, the first negative electrode active material-containing layer was obtained.

On the other hand, 90% by mass of a powder of TiNb_{1.8}Ta_{0.2}O₇, 5.8% by mass of acetylene black, 4% by mass of polyvinylidene fluoride (PVdF), and 0.2% by mass of azobisisobutyronitrile as the polymerization initiator were added to N-methyl-2-pyrrolidone (NMP), and mixed by using a planetary centrifugal mixer to prepare a second slurry.

The second slurry was coated on the first negative electrode active material-containing layer, which had previously been obtained, and the coated film was dried. An amount of the slurry coated was adjusted so that the total amount of the amount of the first slurry coated for the first negative electrode active material-containing layer and the amount of the second slurry coated here was 50 g/m². Thus, the second negative electrode active material-containing layer was obtained.

Next, the first negative electrode active material-containing layer and the second negative electrode active material-containing layer were pressed from the surface of the second negative electrode active material-containing layer toward the current collector, thereby producing a negative electrode having an electrode density (excluding the current collector) of 2.6 g/cm³.

### (EXAMPLE 17)

In Example 17, a nonaqueous electrolyte battery of Example 17 was produced in the same manner as in Example 1, except that a positive electrode and a negative electrode were produced in the following procedures.

### [Production of Positive Electrode]

In Example 17, the composition of the lithium-nickel-cobalt-manganese composite oxide used in Example 1 was changed to LiNi_{0.6}Co_{0.2}Mn_{0.2}O₂.

In Example 17, 90% by mass of a powder of LiNi_{0.6}Co_{0.2}Mn_{0.2}O₂, 3% by mass of carbon black, 3% by mass of graphite, and 4% by mass of PVdF were dispersed in N-methyl-2-pyrrolidone (NMP) to prepare a slurry. The slurry was coated on the aluminum foil, the coated film was dried, and then was subjected to rolling, thereby producing a positive electrode having an electrode density (excluding the current collector) of 3.0 g/cm³.

### [Production of Negative Electrode]

In Example 17, a negative electrode was produced using, as the titanium-containing oxide, a powder of TiNb₂O₇ to which carbon was attached on the particle surface thereof in the following procedures.

First, 90% by mass of a powder of TiNb₂O₇ to which carbon was attached on the particle surface thereof, 5% by mass of acetylene black, 4% by mass of polyvinylidene fluoride (PVdF), and 1% by mass of azobisisobutyronitrile as the polymerization initiator, were added to N-methyl-2-pyrrolidone (NMP), and mixed by using a planetary centrifugal mixer to prepare a first slurry.

The first slurry was coated on both surfaces of a current collector formed of an aluminum foil having a thickness of 15 µm, and the coated films were dried. An amount of the slurry coated was 25 g/m². Thus, the first negative electrode active material-containing layer was obtained.

On the other hand, 90% by mass of a powder of TiNb₂O₇ to which carbon was attached on the particle surface thereof, 5.8% by mass of acetylene black, 4% by mass of polyvinylidene fluoride (PVdF), and 0.2% by mass of azobisisobutyronitrile as the polymerization initiator, were added to N-methyl-2-pyrrolidone (NMP), and mixed by using a planetary centrifugal mixer to prepare a second slurry.

The second slurry was coated on the first negative electrode active material-containing layer, which had previously been obtained, and the coated film was dried. An amount of the second slurry coated was adjusted so that the total amount of the amount of the first slurry coated for the first negative electrode active material-containing layer and the amount of the second slurry coated here was 50 g/m². Thus, the second negative electrode active material-containing layer was obtained.

Next, the first negative electrode active material-containing layer and the second negative electrode active material-containing layer were pressed from the surface of the second negative electrode active material-containing layer toward the current collector, thereby producing a negative electrode having an electrode density (excluding the current collector) of 2.6 g/cm³.

### (EXAMPLE 18)

In Example 18, a nonaqueous electrolyte battery of Example 18 was produced in the same manner as in Example 1, except that a positive electrode and a negative electrode were produced in the following procedures.

### [Production of Positive Electrode]

In Example 18, the composition of the lithium-nickel-cobalt-manganese composite oxide used in Example 1 was changed to LiNi_{0.8}Co_{0.1}Mn_{0.1}O₂.

In Example 18, 90% by mass of LiNi_{0.8}Co_{0.1}Mn_{0.1}O₂, 3% by mass of carbon black, 3% by mass of graphite, and 4% by mass of PVdF were dispersed in N-methyl-2-pyrrolidone (NMP) to prepare a slurry. The slurry was coated on the aluminum foil, the coated film was dried, which was subjected to rolling, thereby producing a positive electrode having an electrode density (excluding the current collector) of 3.0 g/cm³.

### [Production of Negative Electrode]

In Example 18, a negative electrode was produced using, as the titanium-containing oxide, a powder of Ti_{1.95}Nb₂Fe_{0.05}O₇ and a powder of Ti_{1.15}Nb_{1.7}Mo_{0.2}O₇ in the following procedures.

First, 90% by mass of a powder of Ti_{1.95}Nb₂Fe_{0.05}O₇, 5% by mass of acetylene black, 4% by mass of polyvinylidene fluoride (PVdF), and 1% by mass of azobisisobutyronitrile as the polymerization initiator were added to N-2-methylpyrrolidone (NMP), and mixed by using a planetary centrifugal mixer to prepare a first slurry.

The first slurry was coated on both surfaces of a current collector formed of an aluminum foil having a thickness of 15 µm, and the coated films were dried. An amount of the slurry coated was 25 g/m². Thus, the first negative electrode active material-containing layer was obtained.

On the other hand, 90% by mass of a powder of Ti_{1.15}Nb_{1.7}Mo_{0.2}O₇, 5.8% by mass of acetylene black, 4% by mass of polyvinylidene fluoride (PVdF), and 0.2% by mass of azobisisobutyronitrile as the polymerization initiator were added to N-methyl pyrrolidone (NMP), and mixed by using a planetary centrifugal mixer to prepare a second slurry.

The second slurry was coated on the first negative electrode active material-containing layer, which had previously been obtained, and the coated film was dried. An amount of the second slurry coated was adjusted so that the total amount of the amount of the first slurry coated for the first negative electrode active material-containing layer and the amount of the second slurry coated here was 50 g/m². Thus, the second negative electrode active material-containing layer was obtained.

Next, the first negative electrode active material-containing layer and the second negative electrode active material-containing layer were pressed from the surface of the second negative electrode active material-containing layer toward the current collector, thereby producing a negative electrode having an electrode density (excluding the current collector) of 2.6 g/cm³.

### (EXAMPLE 19)

In Example 19, a nonaqueous electrolyte battery of Example 19 was produced in the same manner as in Example 1, except that a positive electrode and a negative electrode were produced in the following procedures.

### [Production of Positive Electrode]

In Example 19, a positive electrode was produced in the following procedures, using a powder of composite oxide having a composition of LiNi_{0.5}Co_{0.2}Mn_{0.3}O₂ which was different from that of the lithium-nickel-cobalt-manganese composite oxide used in Example 1 and further a powder of lithium cobaltate LiCoO₂.

In Example 19, 70% by mass of a powder of LiNi_{0.5}Co_{0.2}Mn_{0.3}O₂, 20% by mass of a powder of LiCoO₂, 3% by mass of carbon black, 3% by mass of graphite, and 4% by mass of PVdF were dispersed in N-methyl-2-pyrrolidone (NMP) to prepare a slurry. The slurry was coated on the aluminum foil, the coated film was dried, and then was subjected to rolling, thereby producing a positive electrode having an electrode density (excluding the current collector) of 3.0 g/cm³.

### [Production of Negative Electrode]

In Example 19, a negative electrode was produced in the following procedures, using, as the titanium-containing oxide, a powder of orthorhombic Na-containing niobium-titanium composite oxide Li_{2.2}Na_{1.5}Ti_{5.5}Nb_{0.5}O₁₄, and a powder of monoclinic niobium-titanium composite oxide TiNb₂O₇.

The powder of orthorhombic Na-containing niobium-titanium composite oxide Li_{2.2}Na_{1.5}Ti_{5.5}Nb_{0.5}O₁₄ was prepared as described below. First, as starting materials, a powder of titanium dioxide TiO₂, a powder of lithium carbonate, Li₂CO₃, a powder of sodium carbonate Na₂CO₃, and a powder of niobium (V) hydroxide Nb(OH)₅ were mixed at a molar ratio of Li : Na : Ti : Nb of 2.2 : 1.5 : 5.5 : 0.5. The mixture of the starting materials was subjected to heat-treatment at 950°C over 5 hours in the air atmosphere to obtain a powdery product. The product was subjected to a composition analysis according to ICP, and it was found the powdery product was a powder of composite oxide,
Li_{2.2}Na_{1.5}Ti_{5.5}Nb_{0.5}O_{14.}

In Example 19, 90% by mass of a powder of Li_{2.2}Na_{1.5}Ti_{5.5}Nb_{0.5}O₁₄, 5% by mass of acetylene black, 4% by mass of polyvinylidene fluoride (PVdF), and 1% by mass of azobisisobutyronitrile as the polymerization initiator were added to N-methyl-2-pyrrolidone (NMP), and mixed by using a planetary centrifugal mixer to prepare a first slurry.

The first slurry was coated on both surfaces of a current collector formed of an aluminum foil having a thickness of 15 µm, and the coated films were dried. An amount of the slurry coated was 50 g/m². Thus, the first negative electrode active material-containing layer was obtained.

On the other hand, 90% by mass of a powder of TiNb₂O₇, 5.5% by mass of acetylene black, 4% by mass of polyvinylidene fluoride (PVdF), and 0.5% by mass of azobisisobutyronitrile as the polymerization initiator were added to N-methyl-2-pyrrolidone (NMP), and mixed by using a planetary centrifugal mixer to prepare a second slurry.

The second slurry was coated on the first negative electrode active material-containing layer, which had previously been obtained, and the coated film was dried. An amount of the second slurry coated was adjusted so that the total amount of the amount of the first slurry coated for the first negative electrode active material-containing layer and the amount of the second slurry coated here was 75 g/m². Thus, the second negative electrode active material-containing layer was obtained.

Next, the first negative electrode active material-containing layer and the second negative electrode active material-containing layer were pressed from the surface of the second negative electrode active material-containing layer toward the current collector, thereby producing a negative electrode having an electrode density (excluding the current collector) of 2.4 g/cm³.

### (EXAMPLE 20)

In Example 20, a nonaqueous electrolyte battery of Example 20 was produced in the same manner as in Example 1, except that a positive electrode and a negative electrode were produced in the following procedures.

### [Production of Positive Electrode]

In Example 20, a positive electrode was produced in the following procedures, using a powder of composite oxide having a composition of LiNi_{0.6}Co_{0.2}Mn_{0.2}O₂ which is different from that of the lithium-nickel-cobalt-manganese composite oxide used in Example 1, and further a powder of lithium cobaltate LiCoO₂.

In Example 20, 70% by mass of a powder of LiNi_{0.6}Co_{0.2}Mn_{0.2}O₂, 20% by mass of a powder of LiCoO₂, 3% by mass of carbon black, 3% by mass of graphite, and 4% by mass of PVdF were dispersed in N-methyl-2-pyrrolidone (NMP) to prepare a slurry. The slurry was coated on the aluminum foil, the coated film was dried, and then was subjected to rolling, thereby producing a positive electrode having an electrode density (excluding the current collector) of 3.0 g/cm³.

### [Production of Negative Electrode]

In Example 20, a negative electrode was produced in the following procedures, using, as the titanium-containing oxide, a powder of spinel-type lithium titanate Li₄Ti₅O₁₂ and a powder of monoclinic niobium-titanium composite oxide TiNb₂O₇.

In Example 20, first, 90% by mass of a powder of Li₄Ti₅O₁₂, 5% by mass of acetylene black, 4% by mass of polyvinylidene fluoride (PVdF), and 1% by mass of azobisisobutyronitrile as the polymerization initiator were added to N-methyl-2-pyrrolidone (NMP), and mixed by using a planetary centrifugal mixer to prepare a first slurry.

The first slurry was coated on both surfaces of a current collector formed of an aluminum foil having a thickness of 15 µm, and the coated films were dried. An amount of the slurry coated was 40 g/m². Thus, the first negative electrode active material-containing layer was obtained.

On the other hand, 90% by mass of a powder of TiNb₂O₇, 5.3% by mass of acetylene black, 4% by mass of polyvinylidene fluoride (PVdF), and 0.7% by mass of azobisisobutyronitrile, which was the polymerization initiator, were added to N-methyl-2-pyrrolidone (NMP), and mixed by using a planetary centrifugal mixer to prepare a second slurry.

The second slurry was coated on the first negative electrode active material-containing layer, which had previously been obtained, and the coated film was dried. An amount of the second slurry coated was adjusted so that the total amount of the amount of the first slurry coated for the first negative electrode active material-containing layer and the amount of the second slurry coated here was 65 g/m². Thus, the second negative electrode active material-containing layer was obtained.

Next, the first negative electrode active material-containing layer and the second negative electrode active material-containing layer were pressed from the surface of the second negative electrode active material-containing layer toward the current collector, thereby producing a negative electrode having an electrode density (excluding the current collector) of 2.4 g/cm³.

### (EXAMPLE 21)

In Example 21, a nonaqueous electrolyte battery of Example 21 was produced in the same manner as in Example 1, except that a positive electrode and a negative electrode were produced in the following procedures.

### [Production of Positive Electrode]

In Example 21, a positive electrode was produced in the following procedures, using a powder of composite oxide having a composition of LiNi_{0.5}Co_{0.1}Mn_{0.1}O₂ which is different from that of the lithium-nickel-cobalt-manganese composite oxide used in Example 1, and further a powder of lithium cobaltate LiCoO₂.

In Example 21, 70% by mass of a powder of LiNi_{0.8}Co_{0.1}Mn_{0.1}O₂, 20% by mass of a powder of LiCoO₂, 3% by mass of carbon black, 3% by mass of graphite, and 4% by mass of PVdF were dispersed in N-methyl-2-pyrrolidone (NMP) to prepare a slurry. The slurry was coated on the aluminum foil, the coated film was dried, and then was subjected to rolling, thereby producing a positive electrode having an electrode density (excluding the current collector) of 3.0 g/cm³.

### [Production of Negative Electrode]

In Example 21, a negative electrode was produced in the following procedures, using, as the titanium-containing oxide, a powder of spinel-type lithium titanate Li₄Ti₅O₁₂, and a powder of monoclinic titanium dioxide TiO₂(B).

In Example 21, first, a first slurry was prepared in the same manner as in Example 20.

The first slurry was coated on both surfaces of a current collector formed of an aluminum foil having a thickness of 15 µm, and the coated films were dried. An amount of the slurry coated was 40 g/m². Thus, the first negative electrode active material-containing layer was obtained.

On the other hand, 90% by mass of a powder of TiO₂(B), 5.8% by mass of acetylene black, 4% by mass of polyvinylidene fluoride (PVdF), and 0.2% by mass of azobisisobutyronitrile, which was the polymerization initiator, were added to N-methyl-2-pyrrolidone (NMP), and mixed by using a planetary centrifugal mixer to prepare a second slurry.

The second slurry was coated on the first negative electrode active material-containing layer, which had previously been obtained, and the coated film was dried. An amount of the second slurry coated was adjusted so that the total amount of the amount of the first slurry coated for the first negative electrode active material-containing layer and the amount of the second slurry coated here was 70 g/m². Thus, the second negative electrode active material-containing layer was obtained.

Next, the first negative electrode active material-containing layer and the second negative electrode active material-containing layer were pressed from the surface of the second negative electrode active material-containing layer toward the current collector, thereby producing a negative electrode having an electrode density (excluding the current collector) of 2.0 g/cm³.

### (EXAMPLE 22)

In Example 22, a nonaqueous electrolyte battery of Example 22 was produced in the same manner as in Example 1, except that a negative electrode was produced in the following procedures.

### [Production of Negative Electrode]

In Example 22, first, a powder of orthorhombic Na-containing niobium-titanium composite oxide Li₂Na_{1.7}Ti₅. ₇Nb_{0.3}O₁₄, acetylene black, polyvinylidene fluoride (PVdF), and azobisisobutyronitrile as the polymerization initiator were provided. They were added to N-methyl-2-pyrrolidone (NMP) at a mass ratio of the powder of Li₂Na_{1.7}Ti_{5.7}Nb_{0.3}O₁₄ : acetylene black : PVdF : azobisisobutyronitrile of 90% by mass : 5% by mass : 4% by mass : 1% by mass, and mixed by using a planetary centrifugal mixer to prepare a slurry.

On the other hand, an aluminum foil, on which azobisisobutyronitrile as the polymerization initiator was coated in a thickness of 5 µm, was provided as an aluminum foil for coating the slurry. The prepared slurry was coated on both surfaces of the aluminum foil, and the coated films were dried. The amount of the slurry coated was 100 g/m².

Then, the dried coated film was pressed, thereby producing a negative electrode having an electrode density (excluding the current collector) of 2.3 g/cm³.

### (COMPARATIVE EXAMPLE 1)

In Comparative Example 1, a nonaqueous electrolyte battery of Comparative Example 1 was obtained in the same manner as in Example 1, except that a negative electrode was produced in the following procedures, and that a nonaqueous electrolyte was produced in the following procedures, and that heating was not performed after the liquid nonaqueous electrolyte was housed in the container.

### [Production of Negative Electrode]

In Comparative Example 1, 90% by mass of a powder of Li₂Na_{1.7}Ti_{5.7}Nb_{0.3}O₁₄, 5% by mass of acetylene black, and 5% by mass of polyvinylidene fluoride (PVdF) were added to N-methyl-2-pyrrolidone (NMP), and mixed by a planetary centrifugal mixer to prepare a slurry. The slurry was coated on both surfaces of a current collector formed of an aluminum foil having a thickness of 15 µm, and the coated films were dried. Then, the coated films were pressed to produce a negative electrode having an electrode density (excluding the current collector) of 2.3 g/cm³.

### [Production of Liquid Nonaqueous Electrolyte]

Propylene carbonate (PC) and ethyl methyl carbonate (MEC) were mixed at a volume ratio of 1 : 2 to mixed solvent. Then, LiPF₆, which was the electrolyte, was dissolved in this mixed solvent in a concentration of 1 M to prepare a liquid nonaqueous electrolyte.

### (COMPARATIVE EXAMPLE 2)

In Comparative Example 2, a nonaqueous electrolyte battery of Comparative Example 2 was produced in the same manner as in Example 1, except that a nonaqueous electrolyte was prepared in the following procedures.

In Comparative Example 2, first, propylene carbonate (PC) and ethyl methyl carbonate (MEC) were mixed at a volume ratio of 1 : 2, with which azobisisobutyronitrile as the polymerization initiator, methyl methacrylate as the monomer, and ethyleneglycol dimethacrylate as the cross-linking agent, were mixed to obtain a mixed solvent. LiPF₆, which was the electrolyte, was dissolved in the mixed solvent in a concentration of 1 M to prepare a liquid nonaqueous electrolyte.

### (COMPARATIVE EXAMPLE 3)

In Comparative Example 3, a nonaqueous electrolyte battery of Comparative Example 3 was produced in the same manner as in Comparative Example 2, except that a negative electrode was produced in the following procedures.

In Comparative Example 3, first, the same second slurry as in Example 1 was prepared. The prepared second slurry was coated on both surfaces of a current collector formed of an aluminum foil having a thickness of 15 µm, and the coated films were dried. The amount of the slurry coated was 50 g/m². Thus, a third negative electrode active material-containing layer was obtained.

On the other hand, the same first slurry as in Example 1 was prepared. The prepared first slurry was coated on the third negative electrode active material-containing layers, which had been previously obtained, and the coated films were dried. An amount of the first slurry coated was adjusted so that the total amount of the amount of the second slurry coated for the third negative electrode active material-containing layer and the amount of the first slurry coated here was 100 g/m². Thus, a fourth negative electrode active material-containing layer was obtained.

Next, the third negative electrode active material-containing layer and the fourth negative electrode active material-containing layer were pressed from the surface of the fourth negative electrode active material-containing layer toward the current collector, thereby producing a negative electrode having an electrode density (excluding the current collector) of 2.3 g/cm³.

### (COMPARATIVE EXAMPLE 4)

In Comparative Example 4, a nonaqueous electrolyte battery of Comparative Example 4 was produced in the same manner as in Comparative Example 2, except that a negative electrode was produced in the following procedures.

In Comparative Example 4, 90% by mass of a powder of TiNb₂O₇, 5% by mass of acetylene black, and 5% by mass of polyvinylidene fluoride (PVdF) were added to N-methyl-2-pyrrolidone (NMP), and mixed by using a planetary centrifugal mixer to prepare a slurry.

The slurry was coated on both sides of a current collector formed of an aluminum foil having a thickness of 15 µm, and the coated films were dried. Then, the coated films were pressed to produce a negative electrode having an electrode density (excluding the current collector) of 2.6 g/cm³.

### (COMPARATIVE EXAMPLE 5)

In Comparative Example 5, a nonaqueous electrolyte battery of Comparative Example 5 was produced in the same manner as in Comparative Example 2, except that a negative electrode was produced in the following procedures.

In Comparative Example 5, 90% by mass of a powder of TiO₂(B), 5% by mass of acetylene black, and 5% by mass of polyvinylidene fluoride (PVdF) were added to N-methyl-2-pyrrolidone (NMP), and mixed by using a planetary centrifugal mixer to prepare a slurry.

The slurry was coated on both surfaces of a current collector formed of an aluminum foil having a thickness of 15 µm, and the coated films were dried. Then, the coated films were pressed to produce a negative electrode having an electrode density (excluding the current collector) of 2.0 g/cm³.

### (EXAMPLE 23)

In Example 23, a nonaqueous electrolyte battery of Example 23 was produced in the same manner as in Example 1, except that a negative electrode was produced in the following procedures, and that a nonaqueous electrolyte was prepared in the following procedures.

In Example 23, a first slurry and a second slurry were prepared using polyacrylonitrile instead of azobisisobutyronitrile used in Example 1. An amount of the polyacrylonitrile added to NMP when the first slurry was prepared was adjusted to 1% by mass relative to the total amount of the powder of Li₂Na_{1.7}Ti_{5.7}Nb_{0.3}O₁₄, the acetylene black, the PVdF and the polyacrylonitrile. On the other hand, an amount of the polyacrylonitrile added to NMP when the second slurry was prepared was adjusted to 0.2% by mass relative to the total amount of the powder of Li₂Na_{1.7}Ti_{5.7}Nb_{0.3}O₁₄, the acetylene black, the PVdF and the polyacrylonitrile.

The negative electrode was produced in the same manner as in Example 1 except that the thus prepared first slurry and second slurry were used. The negative electrode obtained after the pressing step had an electrode density (excluding the current collector) of 2.3 g/cm³.

In Example 23, propylene carbonate (PC) and ethyl methyl carbonate (MEC) were mixed at a volume ratio of 1 : 2 to obtain a mixed solvent. Next, LiPF₆, which was the electrolyte, was dissolved in the mixed solvent in a concentration of 1 M to prepare a liquid nonaqueous electrolyte. With the obtained liquid nonaqueous electrolyte was further mixed 3% by mass of polyacrylonitrile.

The thus prepared liquid nonaqueous electrolyte was injected into a container formed of a laminate film, in which the electrode group was housed. Next, the container was heated at 95°C for 3 hours, and then it was cooled to room temperature to obtain a gel nonaqueous electrolyte of polyacrylonitrile.

After that, the container was completely sealed up by heat-sealing. Thus, the nonaqueous electrolyte battery of Example 23 was produced which had a width of 35 mm a thickness of 3.2 mm, and a height of 65 mm.

### (EXAMPLE 24)

In Example 24, a nonaqueous electrolyte battery of Example 24 was produced in the same manner as in Example 1, except that a negative electrode was produced in the following procedures, and that a nonaqueous electrolyte was prepared in the following procedures.

In Example 24, a first slurry and a second slurry were prepared using polyethylene oxide instead of azobisisobutyronitrile used in Example 1. An amount of polyethylene oxide added to NMP when the first slurry was prepared was adjusted to 1% by mass relative to the total amount of the powder of Li₂Na_{1.7}Ti_{5.7}Nb_{0.3}O₁₄, the acetylene black, the PVdF and the polyethylene oxide. On the other hand, an amount of the polyethylene oxide added to NMP when the second slurry was prepared was adjusted to 0.2% by mass relative to the total amount of the powder of Li₂Na_{1.7}Ti_{5.7}Nb_{0.3}O₁₄, the acetylene black, the PVdF, and the polyethylene oxide.

The negative electrode was produced in the same manner as in Example 1 except that the thus prepared first slurry and second slurry were used. The negative electrode obtained after the pressing step had an electrode density (excluding the current collector) of 2.3 g/cm³.

In Example 24, propylene carbonate (PC) and ethyl methyl carbonate (MEC) were mixed at a volume ratio of 1 : 2 to obtain a mixed solvent. Next, LiPF₆, which was the electrolyte, was dissolved in the mixed solvent in a concentration of 1 M to prepare a liquid nonaqueous electrolyte. With the obtained liquid nonaqueous electrolyte was further mixed 3% by mass of polyethylene oxide.

The thus prepared liquid nonaqueous electrolyte was injected into a container formed of a laminate film, in which the electrode group was housed. Next, the container was heated at 95°C for 3 hours, and then it was cooled to room temperature to obtain a gel nonaqueous electrolyte of polyethylene oxide.

After that, the container was completely sealed up by heat-sealing. Thus, the nonaqueous electrolyte battery of Example 24 was produced which had a width of 35 mm a thickness of 3.2 mm, and a height of 65 mm.

### (EXAMPLE 25)

In Example 25, a nonaqueous electrolyte battery of Example 25 was produced in the same manner as in Example 1, except that a negative electrode was produced in the following procedures, and that a nonaqueous electrolyte was prepared in the following procedures.

In Example 25, a first slurry and a second slurry were prepared using a polyvinylidene fluoride-hexafluoropropylene copolymer instead of azobisisobutyronitrile used in Example 1. An amount of the polyvinylidene fluoride-hexafluoropropylene copolymer added to NMP when the first slurry was prepared was adjusted to 1% by mass relative to the total amount of the powder of Li₂Na_{1.7}Ti_{5.7}Nb_{0.3}O₁₄, the acetylene black, the PVdF and the polyethylene oxide. On the other hand, an amount of the polyethylene oxide added to NMP when the second slurry was prepared was adjusted to 0.2% by mass relative to the total amount of the powder of Li₂Na_{1.7}Ti_{5.7}Nb_{0.3}O₁₄, the acetylene black, the PVdF, and the polyvinylidene fluoride-hexafluoropropylene copolymer.

The negative electrode was produced in the same manner as in Example 1 except that the thus prepared first slurry and second slurry were used. The negative electrode obtained after the pressing step had an electrode density (excluding the current collector) of 2.3 g/cm³.

In Example 25, propylene carbonate (PC) and ethyl methyl carbonate (MEC) were mixed at a volume ratio of 1 : 2 to obtain a mixed solvent. Next, LiPF₆, which was the electrolyte, was dissolved in the mixed solvent in a concentration of 1 M to prepare a liquid nonaqueous electrolyte. With the obtained liquid nonaqueous electrolyte was further mixed 3% by mass of the polyvinylidene fluoride-hexafluoropropylene copolymer.

The thus prepared liquid nonaqueous electrolyte was injected into a container formed of a laminate film, in which the electrode group was housed. Next, the container was heated at 95°C for 3 hours, and then it was cooled to room temperature to obtain a gel nonaqueous electrolyte of the polyvinylidene fluoride-hexafluoropropylene copolymer.

After that, the container was completely sealed up by heat-sealing. Thus, the nonaqueous electrolyte battery of Example 25 was produced which had a width of 35 mm a thickness of 3.2 mm, and a height of 65 mm.

### [Evaluation]

The nonaqueous electrolyte batteries from Examples 2 to 25 and the nonaqueous electrolyte batteries from Comparative Examples 1 to 5 were subjected to the same charge-and-discharge cycle as performed in the nonaqueous electrolyte battery from Example 1. The results are shown in Table 1 below. In addition, 1 C current values determined from the confirmation of the capacities in Examples 1 to 25 and Comparative Examples 1 to 5 are shown in Table 2.

In addition, ratio E₁/E₂ of the amount of the gel nonaqueous electrolyte in the negative electrode active material-containing layer of each of the nonaqueous electrolyte batteries of Examples 2 to 25 and the nonaqueous electrolyte batteries of Comparative Examples 1 to 5 was measured in the method described above. The results are shown in Table 1 below.

**[Table 1]**

| | E₁/E₂ | Discharge Capacity Retention Ratio [%] |
|---|---|---|
| Example 1 | 0.2 | 83 |
| Example 2 | 0.2 | 80 |
| Example 3 | 0.3 | 88 |
| Example 4 | 0.3 | 87 |
| Example 5 | 0.2 | 80 |
| Example 6 | 0.2 | 79 |
| Example 7 | 0.2 | 85 |
| Example 8 | 0.3 | 85 |
| Example 9 | 0.2 | 78 |
| Example 10 | 0.3 | 80 |
| Example 11 | 0.2 | 82 |
| Example 12 | 0.1 | 80 |
| Example 13 | 0.2 | 85 |
| Example 14 | 0.2 | 81 |
| Example 15 | 0.2 | 82 |
| Example 16 | 0.3 | 80 |
| Example 17 | 0.3 | 78 |
| Example 18 | 0.2 | 76 |
| Example 19 | 0.5 | 82 |
| Example 20 | 0.7 | 84 |
| Example 21 | 0.2 | 79 |
| Example 22 | 0.8 | 81 |
| Example 23 | 0.8 | 86 |
| Example 24 | 0.5 | 81 |
| Example 25 | 0.4 | 84 |
| Comparative Example 1 | - | 70 |
| Comparative Example 2 | 1.1 | 75 |
| Comparative Example 3 | 3.2 | 72 |
| Comparative Example 4 | 1.1 | 73 |
| Comparative Example 5 | 1 | 69 |

**[Table 2]**

| | Current Value corresponding to 1 C [mA] |
|---|---|
| Example 1 | 400 |
| Example 2 | 400 |
| Example 3 | 350 |
| Example 4 | 350 |
| Example 5 | 500 |
| Example 6 | 500 |
| Example 7 | 500 |
| Example 8 | 500 |
| Example 9 | 450 |
| Example 10 | 450 |
| Example 11 | 400 |
| Example 12 | 400 |
| Example 13 | 375 |
| Example 14 | 400 |
| Example 15 | 400 |
| Example 16 | 500 |
| Example 17 | 500 |
| Example 18 | 500 |
| Example 19 | 450 |
| Example 20 | 450 |
| Example 21 | 425 |
| Example 22 | 400 |
| Example 23 | 400 |
| Example 24 | 400 |
| Example 25 | 400 |
| Comparative Example 1 | 400 |
| Comparative Example 2 | 400 |
| Comparative Example 3 | 400 |
| Comparative Example 4 | 500 |
| Comparative Example 5 | 450 |

From the results in Examples 1 to 25 and Comparative Examples 1 to 5, shown in Table 1, it is understood that the nonaqueous electrolyte batteries from Examples 1 to 24, each having a ratio E₁/E₂ of the content of the gel nonaqueous electrolyte within a range of 0.1 ≤ E₁/E₂ ≤ 0.8, could exhibit the more excellent cycle life property than the nonaqueous electrolyte battery of Comparative Example 1, which included no gel nonaqueous electrolyte, and the batteries of Comparative Examples 2 to 5 whose ratio E₁/E₂ of the content of the gel nonaqueous electrolyte beyond the range of 0.1 ≤ E₁/E₂ ≤ 0.8.

On the other hand, it is considered that in the battery from Comparative Example 1 containing no gel nonaqueous electrolyte, the separation of the electrode layer and the depletion of the electrolytic solution occurred, and thus the battery was easily deteriorated.

In the nonaqueous electrolyte batteries from Comparative Examples 2, 4 and 5, the ratio E₁/E₂ of the content of the gel nonaqueous electrolyte was 1 or 1.1. It is considered that in these batteries, the gel nonaqueous electrolyte is distributed uniformly.

In the nonaqueous electrolyte battery of Comparative Example 3, the ratio E₁/E₂ of the content of the gel nonaqueous electrolyte was high. It is considered that the content E₁ of the gel nonaqueous electrolyte was too large. It is considered that, in the nonaqueous electrolyte batteries, the gel nonaqueous electrolyte having a higher resistance than that of the liquid nonaqueous electrolyte existed in a large content in a part facing the positive electrode in the negative electrode active material-containing layer, and thus the overvoltage occurred, and the negative electrode was easily deteriorated.

According to one or more embodiments and Examples, as described above, the nonaqueous electrolyte battery is provided. The nonaqueous electrolyte battery satisfies the ratio E₁/E₂ of the content of the gel nonaqueous electrolyte in the negative electrode active material-containing layer is within a range of 0.1 ≤ E₁/E₂ ≤ 0.8, and thus the depletion of the nonaqueous electrolyte can be inhibited in the negative electrode active material-containing layer, and the excellent binding property can be exhibited between the negative electrode active material-containing layer and the negative electrode current collector. From these results, the nonaqueous electrolyte battery can exhibit the excellent cycle life performance.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A nonaqueous electrolyte battery (10) comprising:
a positive electrode (5, 13);
a negative electrode (3, 14) comprising a negative electrode current collector (3a, 14a) and a negative electrode active material-containing layer (3b, 14b) which is formed on the negative electrode current collector (3a, 14a) and comprises a titanium-containing oxide, the negative electrode active material-containing layer (3b, 14b) comprising a first surface (3b-1) facing the positive electrode (5, 13) and a second surface (3b-2) facing the negative electrode current collector (3a, 14a); and
a gel nonaqueous electrolyte;
wherein at least a part of the gel nonaqueous electrolyte is held in the negative electrode active material-containing layer (3b, 14b),
the negative electrode active material-containing layer (3b, 14b) comprises a first part (3-1) having a depth of 0.1T from the first surface (3b-1), and a second part (3-2) having a depth of 0.1T from the second surface (3b-2), where T is a thickness from the first surface (3b-1) to the second surface (3b-2) of the negative electrode active material-containing layer (3b, 14b), and
the nonaqueous electrolyte battery satisfies a ratio of E₁/E₂ within a range of 0.1 ≤ E₁/E₂ ≤ 0.8, E₁ is a content of the gel nonaqueous electrolyte in the first part (3-1) and E₂ is a content of the gel nonaqueous electrolyte in the second part (3-2).

2. The nonaqueous electrolyte battery (10) according to claim 1, wherein the gel nonaqueous electrolyte comprises at least one selected from the group consisting of a polyvinylidene fluoride, a polyacrylonitrile, a polymethyl methacrylate, and a polyethylene oxide.

3. The nonaqueous electrolyte battery (10) according to claim 1 or 2, wherein the titanium-containing oxide comprises at least one selected from the group consisting of a Na-containing niobium-titanium composite oxide having an orthorhombic crystal structure, a niobium-titanium composite oxide having a monoclinic crystal structure, and a titanium-containing oxide having a monoclinic β-type crystal structure.

4. The nonaqueous electrolyte battery (10) according to claim 1 or 2, wherein the titanium-containing oxide comprises a lithium titanate having a spinel-type crystal structure, and at least one selected from the group consisting of the Na-containing niobium-titanium composite oxide having the orthorhombic crystal structure, the niobium-titanium composite oxide having the monoclinic crystal structure, and the titanium-containing oxide having the monoclinic β-type crystal structure.

5. The nonaqueous electrolyte battery (10) according to claim 1 or 2, wherein the titanium-containing oxide comprises the Na-containing niobium-titanium composite oxide having the orthorhombic crystal structure, the Na-containing niobium-titanium composite oxide is represented by the general formula of Li₂₊ᵥNa_{2-w}M1ₓTi_{6-y-z}Nb_{y}M2_{z}O_{14+δ}, wherein M1 is at least one metal element selected from the group consisting of Cs, K, Sr, Ba, Mg and Ca; M2 is at least one element selected from the group consisting of Al, Sn, V, Ta, Mo, W, Fe, Co and Mn; 0 ≤ v ≤ 4; 0 < w < 2; 0 ≤ x < 2; 0 < y < 6; 0 ≤ z < 3; and -0.5 ≤ δ ≤ 0.5.

6. The nonaqueous electrolyte battery (10) according to any one of claims 1 to 5, further comprising a liquid nonaqueous electrolyte, and at least a part of the liquid nonaqueous electrolyte is held in the negative electrode active material-containing layer (3b, 14b).

7. The nonaqueous electrolyte battery (10) according to any one of claims 1 to 6, wherein the positive electrode (5, 13) comprises at least one selected from the group consisting of a lithium-cobalt composite oxide, a lithium-nickel-cobalt-manganese composite oxide, a lithium-manganese composite oxide having a spinel-type crystal structure, and a lithium-manganese-iron composite phosphate having a olivine-type crystal structure.

8. A battery pack (20) comprising the nonaqueous electrolyte battery (10, 21) according to any one of claims 1 to 7.

9. The battery pack (20) according to claim 8, further comprising:
an external power distribution terminal (27); and
a protective circuit (26).

10. A battery pack (20) comprising nonaqueous electrolyte batteries (10, 21) each according to any one of claims 1 to 7,
wherein the nonaqueous electrolyte batteries (10, 21) are electrically connected in series, in parallel, or in combination of series and parallel.

11. A vehicle (41) comprising the battery pack (20, 42) according to any one of claims 8 to 10.

12. The vehicle (41) according to claim 11, wherein the battery pack (20, 42) is configured to recover a regenerative energy of a power of the vehicle (41).
